(19) **Europäisches Patentamt**
**European Patent Office**
**Office européen des brevets**

(11) **EP 2 872 777 B1**

(12) **EUROPÄISCHE PATENTSCHRIFT**

(45) Veröffentlichungstag und Bekanntmachung des Hinweises auf die Patenterteilung:
**01.04.2020 Patentblatt 2020/14**

(21) Anmeldenummer: **13732984.3**

(22) Anmeldetag: **03.07.2013**

(51) Int Cl.:
*F03D 9/25* (2016.01)          *H02J 3/16* (2006.01)
*H02J 3/38* (2006.01)          *F03D 7/04* (2006.01)
*F03D 7/02* (2006.01)

(86) Internationale Anmeldenummer:
**PCT/EP2013/064059**

(87) Internationale Veröffentlichungsnummer:
**WO 2014/009223 (16.01.2014 Gazette 2014/03)**

(54) **VERFAHREN ZUM STEUERN EINES ELEKTRISCHEN ERZEUGERS**

METHOD FOR CONTROLLING AN ELECTRIC GENERATOR

PROCÉDÉ POUR COMMANDER UN GÉNÉRATEUR ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **13.07.2012 DE 102012212366**

(43) Veröffentlichungstag der Anmeldung:
**20.05.2015 Patentblatt 2015/21**

(73) Patentinhaber: **Wobben Properties GmbH**
**26607 Aurich (DE)**

(72) Erfinder:
• **DIEDRICHS, Volker**
**26203 Wardenburg (DE)**
• **BUSKER, Kai**
**26629 Großefehn (DE)**
• **BEEKMANN, Alfred**
**26639 Wiesmoor (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
WO-A1-2011/110193          WO-A2-2011/050807
WO-A2-2012/089699          CA-A1- 2 760 888
DE-A1-102008 062 356      US-A1- 2008 303 489

• NICHOLAS W MILLER ET AL: "Advanced controls enable wind plants to provide ancillary services", 2010 IEEE POWER AND ENERGY SOCIETY GENERAL MEETING : [IEEE PES-GM 2010] ; MINNEAPOLIS, MINNESOTA, USA, 25 - 29 JULY 2010, IEEE, PISCATAWAY, NJ, USA, 25. Juli 2010 (2010-07-25), Seiten 1-6, XP031985667, DOI: 10.1109/PES.2010.5589787 ISBN: 978-1-4244-6549-1

EP 2 872 777 B1

**Beschreibung**

Die vorliegende Erfindung betrifft ein Verfahren zum Steuern eines an einem Netzanschlusspunkt an ein elektrisches Versorgungsnetz angeschlossenen Erzeugers elektrischer Energie. Weiterhin betrifft die vorliegende Erfindung einen an einem elektrischen Versorgungsnetz angeschlossenen Erzeuger elektrischer Energie.

Das Einspeisen elektrischer Energie in ein elektrisches Versorgungsnetz, wie bspw. das europäische Verbundnetz, oder das US-amerikanische Stromnetz, sind allgemein bekannt. Dabei wird nachfolgend unter einem elektrischen Versorgungsnetz ein Wechselspannungsnetz verstanden, wie es sich allgemein durchgesetzt hat. Das schließt nicht aus, dass Gleichspannungsabschnitte im Netz vorhanden sind. Ebenso können jedenfalls Aspekte, die frequenzunabhängig sind grundsätzlich auch auf ein Gleichspannungsnetz beziehen. Historisch erfolgt eine Einspeisung in ein elektrisches Versorgungsnetz mit einem Großkraftwerk, das aus Primärenergie, wie z.B. Kohle, Kernenergie oder Gas, einen Synchrongenerator antreibt. Abhängig von der Polpaarzahl des Synchrongenerators und der Drehzahl des Synchrongenerators speist dieser mit einer bestimmten Frequenz in das Versorgungsnetz ein. Der Synchrongenerator kann steuerungstechnisch beeinflusst werden, um bspw. die Leistung einzustellen. Ein solcher Verstellprozess kann aber langsam sein.

Bei sich verändernden Situationen in dem einzuspeisenden Versorgungsnetz beeinflusst oftmals, jedenfalls kurzfristig die physikalische Reaktion des Synchrongenerators eine Änderung eines Netzzustandes. Bspw. erhöht sich die Drehzahl des Synchrongenerators, wenn das Versorgungsnetz die vom Synchrongenerator bereitgestellte bzw. bereitstellbare Leistung nicht vollständig abnehmen kann. Die somit überschüssige Leistung beschleunigt dann den Synchrongenerator, was sich in einer Erhöhung der Einspeisefrequenz bemerkbar macht. Entsprechend kann sich die Frequenz im Versorgungsnetz erhöhen.

Bei der Einspeisung in ein Versorgungsnetz ist zudem die Netzstabilität zu berücksichtigen. Der Verlust der Netzstabilität, also der Verlust der Stabilität des Versorgungsnetzes, kann zum Abschalten des einspeisenden Erzeugers führen. Ein solcher Stabilitätsverlust, der auch im deutschen Sprachgebrauch in der Fachwelt mit "Loss of Stability" bezeichnet und mit "LOS" abgekürzt wird, beschreibt Vorgänge physikalischer Natur, welche einen Weiterbetrieb nicht mehr zulassen und durch Abschaltungen beendet werden müssen. Im Falle von Kraftwerken fällt deren Leistung danach aus und kann dadurch zu einer Eskalierung von sog. Defizitleistung beitragen. Im schlimmsten Fall führt dieser Stabilitätsverlust zum Totalausfall eines Energiesystems in Folge von Fehlerkaskadierung und Defizitakkumulation. Solche Totalausfälle sind äußerst selten, aber bspw. am 24. September 2004 in Italien eingetreten.

Unter dem Verlust der Netzstabilität, der sog. Loss of Stability, ist ein Phänomen zu verstehen, bei dem zunächst eine Winkelstabilität verloren geht, was schließlich zu dem Verlust einer Spannungsstabilität führen kann.

Als Stabilitätskriterien werden insbesondere zu erreichende Überströme festgelegt, welche im Fall des Auftretens eines Stabilitätsverlustes bereitgestellt werden können müssen. Dies setzt eine entsprechende Auslegung der Systeme voraus. Ein neues Kraftwerk, insbesondere ein neu zu bauendes Kraftwerk wird somit auf das Versorgungsnetz abgestimmt, wie es sich an dem Netzanschlusspunkt darstellt, an den das Kraftwerk angeschlossen werden soll.

Ein wichtiges Kriterium beim Anschließen von Großkraftwerken an ein elektrisches Versorgungsnetz ist das Kurzschlussstromverhältnis, das auch im deutschen Sprachgebrauch in Fachkreisen als "Short circuit ratio" bezeichnet und mit "Scr" abgekürzt wird. Dieses Kurzschlussstromverhältnis ist das Verhältnis der Kurzschlussleistung zur Anschlussleistung. Hierbei wird unter Kurzschlussleistung diejenige Leistung verstanden, die das betreffende Versorgungsnetz an dem betrachteten Netzanschlusspunkt, an dem das Kraftwerk angeschlossen werden soll, bereitstellen kann, wenn dort ein Kurzschluss auftritt. Die Anschlussleistung ist die Anschlussleistung des anzuschließenden Kraftwerks, insbesondere also die Nennleistung des anzuschließenden Generators.

Um einen sicheren Betrieb zu gewährleisten, um also einen Stabilitätsverlust - eine Loss of Stability - weitestgehend auszuschließen, werden Kraftwerke üblicherweise so für den betreffenden Netzanschlusspunkt ausgelegt, dass das Kurzschlussstromverhältnis über dem Wert 10, üblicherweise sogar über dem Wert 15, liegt. Das Versorgungsnetz kann dann also eine vergleichsweise hohe Kurzschlussleistung am Netzanschlusspunkt bereitstellen. Das bedeutet, dass das Netz eine geringe Netzimpedanz aufweist und als starkes Netz bezeichnet wird.

Im Falle eines schwachen Netzes, wenn also eine hohe Netzimpedanz vorliegt, kann entsprechend nur mit einer kleinen Anschlussleistung eingespeist werden bzw. es kann nur ein Kraftwerk mit einer kleinen Anschlussleistung angeschlossen werden. Dies führt üblicherweise dazu, dass entweder an einem solchen Netzanschlusspunkt ein neues Kraftwerk nicht angeschlossen wird oder dass das Netz insbesondere durch Vorsehen weiterer, leistungsfähiger Leitungen verändert werden muss. Das wird auch im Allgemeinen als Netzverstärkung bezeichnet.

Für das Einspeisen elektrischer Energie durch dezentrale Erzeugungseinheiten, wie insbesondere Windenergieanlagen, ist das Problem des Stabilitätsverlustes des Netzes, nämlich der sog. Loss of Stability, im Grunde unbekannt. Zwar sind bereits Ende der 90er Jahre erstmals Vorschläge gemacht worden, auch Windenergieanlagen zur elektrischen Stützung des Netzes beitragen zu lassen, jedoch berücksichtigt dies nicht die Ursache eines Stabilitätsverlustes, insbesondere ein Verursachen eines Stabilitätsverlustes durch das Einspeisen in das Versorgungsnetz.

So beschreibt bspw. die deutsche Patentanmeldung US 6,891,281 ein Verfahren, bei dem Windenergieanlagen abhängig von der Netzfrequenz ihre Leistungseinspeisung ändern, insbesondere drosseln können. Die US 7,462,946 schlägt vor, dass im Falle einer Netzstörung, nämlich insbesondere im Falle eines Kurzschlusses, eine Windenergieanlage den Strom, den sie einspeist, begrenzt, statt sich vom Netz zu trennen, um auch hierdurch eine Netzstützung zu erreichen. Aus der US 6,965,174 wird zur Netzstützung durch eine Windenergieanlage ein Verfahren beschrieben, das in Abhängigkeit der Netzspannung einen Phasenwinkel des eingespeisten Stroms einstellt und damit spannungsabhängig Blindleistung in das Netz einspeist um hierdurch das Netz zu stützen. Die US 6,984,898 betrifft ebenfalls ein Verfahren zur Netzstützung mittels einer Windenergieanlage, bei dem die Windenergieanlage ggf. abhängig von der Netzspannung die ins Netz einzuspeisende Leistung reduziert, um hierdurch insbesondere eine Trennung vom Netz zu vermeiden, um auch hierdurch eine Stützung des Netzes durch eine Windenergieanlage zu erreichen.

Dass solche dezentralen Erzeugungseinheiten, wie Windenergieanlagen, die eigentliche Ursache für den Stabilitätsverlust im Netz - die Loss of Stability - sein können, ist nicht berücksichtigt worden. In dem Aufsatz "Loss of (Angle) Stability of Wind Power Plants" von V. Diedrichs et al., eingereicht für und vorgetragen auf dem "10th International Workshop on Large-Scale Integration of Wind Power into Power Systems as well as on Transmission Networks for Offshore Wind Farms, Aarhus (Denmark), 25 - 26 October 2011". Dort wurde grundsätzlich auf das Problem hingewiesen, dass der Stabilitätsverlust im Netz - die Loss of Stability - grundsätzlich auch für an das Versorgungsnetz zum Einspeisen angeschlossene Windenergieanlagen auftreten kann. Dieser Aufsatz stellt dabei im Wesentlichen eine Sensibilisierung für das Problem dar. Auf diesen Aufsatz wird ausdrücklich Bezug genommen und sein Inhalt, insbesondere seine technischen Erläuterungen gelten auch für die vorliegende Anmeldung.

Grundsätzlich sind Erkenntnisse, Erfahrungen oder anderes Wissen vom Anschluss und Betrieb von Großkraftwerken am elektrischen Versorgungsnetz auf Windenergieanlagen, einschließlich großer Windparks mit vielen Windenergieanlagen, die an das Versorgungsnetz zum Einspeisen angeschlossen sind, nicht übertragbar. Bereits der zuständige Fachmann, der ein Kraftwerk an ein Versorgungsnetz anschließt und daran betreiben will, ist ein anderer als der Fachmann, der eine Windenergieanlage an das Versorgungsnetz anschließen und daran betreiben will. Windenergieanlagen - und vieles des Folgenden gilt auch für andere dezentrale Erzeugungseinheiten - sind vom Wind abhängig und müssen somit eine schwankende Energiequelle berücksichtigen; sie speisen üblicherweise nicht mit einem direkt mit dem Netz gekoppelten Synchrongenerator in das Versorgungsnetz ein, sondern verwenden einen spannungsbasierten Wechselrichter; sie weisen eine andere Größenordnung auf als Großkraftwerke, wobei ihre Nennleistung üblicherweise um etwa 3 Zehnerpotenzen unter der eines Großkraftwerks liegen; sie unterliegen üblicherweise andere politischen Gesetzen, die ihnen häufig eine Abnahme der Leistung durch die Betreiber elektrischer Versorgungsnetze zusichern; sie sind üblicherweise dezentral aufgestellt; sie speisen üblicherweise in ein Mittelspannungsnetz ein, wohingegen Großkraftwerke üblicherweise in ein Höchstspannungsnetz einspeisen.

Problematisch ist zudem eine Situation, in der ein zu vermeidender Stabilitätsverlust trotz aller Vorsicht und Vorkehrungen schließlich doch aufgetreten ist. Tritt ein solcher Stabilitätsverlust auf, ist für den betroffenen Netzanschlusspunkt der Erzeuger elektrischer Energie abzuschalten. Ein solches Abschalten wird nach vorgegebenen Kriterien ausgelöst und der jeweils betroffene Erzeuger überwacht diese Kriterien und schaltet ab, wenn er erkannt hat, dass diese Kriterien vorliegen. Damit ändert sich aber sofort die in das Netz eingespeiste Leistung und damit die im Netz vorhandene Leistung. Der Verlust dieser Leistung dieses Erzeugers kann dazu führen, dass weitere Netzanschlusspunkte in der Nähe die Kriterien zum Abschalten aufweisen und entsprechend weitere Erzeuger abschalten, was wiederum das Abschalten noch weiterer Erzeuger nach sich ziehen kann, bis zu einem vollständigen Blackout des gesamten Versorgungsnetzes.

Die WO-Schrift WO 2011/050807 A2 beschreibt ein Verfahren zum Steuern einer Windenergieanlage mit wenigstens einem Generator zum Erzeugen elektrischer Leistung die in ein elektrisches Netz eingespeist wird, wobei die Menge der eingespeisten Leistung auf einer Signalantwort in einem Spannungssignal des elektrischen Netzes basiert.

Die WO-Schrift WO 2011/110193 A1 beschreibt ein Verfahren zum Steuern der Einspeisung elektrischer Leistung einer Windenergieanlage in ein Wechselstromnetz zur Meidung von Überspannungen oder irregulären Leistungsflüssen nach Behebung einer Netzstörung.

Die CA2760888 offenbart ein Verfahren um die Wirkleistungseinspeisung nach einem Netzfehler mittels einer Rampenfunktion innerhalb einer definierten Zeitspanne wieder auf den Ursprungswert zu bringen.

Die WO2012/089699 A2 offenbart um die Einspeisung von Leistung in das Versorgungsnetz durch einen Windpark direkt nach dem Beheben eines Netzfehlers erfüllen zu können, bei einer Netzstörung die Sollwerte für Blindleistung auf 0 zu setzen und gleichzeitig durch die Steuerungseinheiten der Windenergieanlagen auch die Sollwerte für die Wirkleistung auf 0 zu setzen. Nach Beheben des Netzfehlers kann die Parkregelungsvorrichtung dann ausgehend von diesen 0-Werten die Sollwerte für Blindleistung wieder verändern, bis sie einen Wert erreichen, der zum einen den Anforderungen an die Einspeisung von Leistung in das Versorgungsnetz gerecht wird und gleichzeitig die Einspeisung der durch die Windenergieanlagen insgesamt erzeugbaren Leistung gewährleistet.

Das Deutsche Patent- und Markenamt hat in der Prioritätsanmeldung zu vorliegender Anmeldung folgenden Stand der Technik recherchiert: DE 10 2009 027 981 B4, DE 10 2008 062 356 A1, WO 2011/050807 A2 und DE 10 2008 045 938 A1.

Der vorliegenden Erfindung liegt somit die Aufgabe zugrunde, wenigstens eines der o.g. Probleme zu adressieren. Insbesondere soll eine Lösung vorgeschlagen werden, die im Falle eines beschriebenen Stabilitätsverlustes im Versorgungsnetz oder zumindest einem drohenden Stabilitätsverlust den drohenden Schaden so gering wie möglich zu halten. Zumindest soll eine alternative Lösung vorgeschlagen werden.

Erfindungsgemäß wird somit ein Verfahren zum Steuern eines an einem Netzanschlusspunkt an ein elektrisches Versorgungsnetz angeschlossenen Erzeugers elektrischer Energie gemäß Anspruch 1 vorgeschlagen. Demnach wird elektrische Leistung in das elektrische Versorgungsnetz eingespeist, wobei der Erzeuger in einem ersten Arbeitspunkt betrieben wird. Ein solcher Arbeitspunkt kann bspw. bestimmt sein durch die eingespeiste Wirkleistung und ggf. die eingespeiste Blindleistung. Ein Beispiel für einen Arbeitspunkt wäre die Einspeisung von Wirkleistung in Höhe der Nennleistung des Erzeugers und Einspeisung von Blindleistung in Höhe von 10 % der eingespeisten Wirkleistung, um nur ein Beispiel zu nennen.

Während der Erzeuger in diesem ersten Arbeitspunkt betrieben wird, erfolgt dann eine Unterbrechung der Einspeisung, so dass keine Leistung in das Versorgungsnetz eingespeist wird, wenn eine Störung im elektrischen Versorgungsnetz oder eine Störung der Einspeisung in das elektrische Versorgungsnetz vorliegt oder angezeigt wird. Es wird somit eine solche Störung überwacht und wenn sie erkannt wird ein Unterbrechen der Einspeisung ausgelöst. Diese Unterbrechung erfolgt nicht bei jeglichen minimalen Störungen, sondern nur bei Störungen, die eine solche Unterbrechung auslösen sollen. Hierfür können entsprechende Kriterien festgelegt sein, wie bspw. ein zu starker Spannungsabfall oder ein zu starker Gradient eines Spannungsabfalls am Netzanschlusspunkt, um nur zwei Beispiele zu nennen, die auch kombiniert werden können.

Als nächster Schritt wird dann das Einspeisen bzw. die Einspeisung wieder aufgenommen, so dass elektrische Leistung wieder in das Versorgungsnetz eingespeist wird. Eine solche Wiederaufnahme der Einspeisung sollte so schnell wie möglich erfolgen. Sie setzt dabei voraus, dass eine entsprechende Einspeisung überhaupt zulässig ist. Es können aber insbesondere auch Fälle auftreten, bei denen entweder die Störung beseitigt ist, oder bei denen sich das Kriterium der Störung erst aus der Art und Weise des Einspeisens des Erzeugers ableiten lässt. Bspw. kann sich der Betriebspunkt des Erzeugers plötzlich und unerwünscht in einen Bereich verschieben, der für diesen konkreten Erzeuger beim Einspeisen in den entsprechenden Netzanschlusspunkt zu einer Instabilität führt. Somit kann allein durch die Tatsache, dass der betreffende Erzeuger nicht mehr ins Netz einspeist, der mit dem bisherigen Einspeisen dieses Erzeugers verbundene Stabilitätsverlust behoben sein, so dass der Erzeuger, zumindest theoretisch, unmittelbar im Anschluss wieder Einspeisen könnte.

Es wird nun vorgeschlagen, dass der Erzeuger bei Wiederaufnahme der Einspeisung, die Einspeisung in einem zweiten Arbeitspunkt vornimmt, bzw. in den zweiten Arbeitspunkt hochgefahren wird, insbesondere soweit ein sprunghafter Start in dem zweiten Arbeitspunkt unphysikalisch ist. Entsprechend kann das Hochfahren in diesen zweiten Arbeitspunkt auch sehr schnell passieren.

Dieser zweite Arbeitspunkt ist gegenüber dem ersten Arbeitspunkt so ausgelegt, dass mit einer höheren Stabilitätsreserve in das Versorgungsnetz eingespeist wird. Der erste Arbeitspunkt, in dem vor der Störung gearbeitet wurde, und der vorzugsweise auch der übliche Arbeitspunkt dieses Erzeugers sein kann, ist ebenfalls stabil, weist also eine üblicherweise ausreichende Stabilitätsreserve auf. Dennoch wird nun vorgeschlagen, einen zweiten Arbeitspunkt zu wählen, der gegenüber dem ersten Arbeitspunkt eine höhere Stabilitätsreserve aufweist.

Mit einer solchen höheren Stabilitätsreserve kann häufig die Konsequenz verbunden sein, dass der Erzeuger mit weniger Effizienz einspeist, insbesondere weniger Leistung einspeist. Dies wird aber in Kauf genommen, um möglichst schnell den Erzeuger wieder einspeisen zu lassen und damit den Verlust der Einspeiseleistung dieses Erzeugers beim Unterbrechen der Einspeisung so schnell wie möglich zumindest teilweise wieder rückgängig zu machen. Somit wird so schnell wie möglich wieder Leistung bereitgestellt, um insbesondere einer Abschaltkaskade, die im schlimmsten Fall in einem Blackout endet, zu verhindern.

Vorzugsweise ist der Erzeuger ein dezentraler Erzeuger, eine Windenergieanlage oder ein mehrere Windenergieanlagen umfassender Windpark ist.

Ein dezentraler Erzeuger ist einer, der bezogen auf das Netz, in das er einspeist, dezentral angeordnet bzw. angeschlossen ist. Das Netz ist somit nicht auf ihn ausgerichtet und er ist vielmehr bezogen auf Leistungsschwerpunkte des elektrischen Versorgungsnetzes dezentral angeordnet. Zudem weist ein dezentraler Erzeuger üblicherweise eine verhältnismäßig geringe Leistung auf, die üblicherweise nur 10MW oder weniger beträgt. Eine Windenergieanlage ist typischerweise ein dezentraler Erzeuger.

Ein mehrere Windenergieanlagen umfassender Windpark weist eine höhere Anschlussleistung auf, als die einzelnen Windenergieanlagen, die in ihm vereint sind. Er kann dennoch als dezentraler Erzeuger vorgesehen sein, insbesondere wenn er noch eine Größe aufweist, die zumindest deutlich unter der eines Großkraftwerks liegt. Eine Windenergieanlage und/oder ein Windpark ist oftmals in seiner Steuerbarkeit zumindest schneller steuerbar als ein Großkraftwerk. Insbesondere die Einspeisung in ein elektrisches Versorgungsnetz kann bei einer modernen Windenergieanlage oder einem Windpark mit modernen Windenergieanlagen wesentlich schneller und flexibler verändert werden, als dies bei einem Großkraftwerk üblicherweise der Fall ist, vorausgesetzt dass ausreichend Wind vorhanden ist.

**EP 2 872 777 B1**

Vorzugsweise wird eine spannungsbasierte Einspeisung verwendet. Demnach ist der Erzeuger im Grunde als gesteuerte Spannungsquelle ausgebildet und verfügt daher über eine entsprechende Flexibilität beim Einspeisen in das Versorgungsnetz. Auch moderne Windenergieanlagen sind häufig als solche spannungsbasierten Erzeuger ausgebildet. In jedem Fall kann von einem spannungsbasierten Erzeuger oder einer spannungsbasierten Einspeisung gesprochen werden, wenn der Erzeuger, insbesondere die Windenergieanlage, einen spannungsbasierten Wechselrichter zum Einspeisen aufweist.

Gemäß einer Ausführungsform wird vorgeschlagen, dass der Erzeuger im zweiten Arbeitspunkt weniger Wirkleistung und/oder Blindleistung in das Versorgungsnetz einspeist, als im ersten Arbeitspunkt. Vorzugsweise wird hierbei für die Wirkleistung des zweiten Arbeitspunktes ein, um wenigstens 10 %, insbesondere um wenigstens 20 %, reduzierter Wert gegenüber dem Wert des ersten Arbeitspunktes vorgeschlagen. Für die Blindleistung des zweiten Arbeitspunktes wird eine Reduzierung gegenüber der Blindleistung des ersten Arbeitspunktes um wenigstens 10 %, insbesondere um wenigstens 20 %, vorgeschlagen. Es kann im zweiten Arbeitspunkt weniger Wirkleistung als auch weniger Blindleistung eingespeist werden, um hierdurch einen stabileren Arbeitspunkt zu erreichen, bzw. einen Arbeitspunkt zu erreichen, der von einer Stabilitätsgrenze weiter entfernt ist. Dabei ist unter weiter entfernt ein höherer Wirk- bzw. Blindleistungsdifferenzwert zu verstehen. Es hat sich gezeigt, dass oftmals die Reduzierung der Wirkleistung zweckmäßig ist und die Blindleistung nicht zu reduziert werden braucht oder die Blindleistung nur um einen geringeren Wert reduziert zu werden braucht, bezogen auf den ersten Arbeitspunkt. Somit wird vorgeschlagen, dass nach der Unterbrechung der Einspeisung die Windenergieanlage insbesondere mit reduzierter Wirkleistung zunächst betrieben wird, bis sich die Verhältnisse, insbesondere die Verhältnisse im elektrischen Versorgungsnetz, normalisiert und/oder stabilisiert hat.

Weiterhin ist das Verfahren dadurch gekennzeichnet, dass das Wiederaufnehmen der Einspeisung so erfolgt, dass die eingespeiste Blindleistung schneller geändert, insbesondere erhöht wird, als die eingespeiste Wirkleistung, so dass der Blindleistungswert des zweiten Arbeitspunktes eher erreicht wird, als der Wirkleistungswert des zweiten Arbeitspunktes und/oder so dass der Blindleistungswert des ersten Arbeitspunktes eher erreicht wird, als der Wirkleistungswert des ersten Arbeitspunktes. Es wurde erkannt, dass die Stabilität der Einspeisung und/oder des Netzes beim Wiederanfahren erhöht werden kann, wenn zunächst mehr Blindleistung als Wirkleistung, oder sogar nur Blindleistung eingespeist wird. Dabei wird jeweils der Endwert der zugrunde gelegt, der zwischen der Blindleistung und der Wirkleistung unterschiedlich sein kann.

Es wird somit vorgeschlagen, beim Wiederaufnehmen der Einspeisung durch einen geeigneten Blindleistungsanteil einen möglichst stabilen Arbeitspunkt zu erreichen. So kann z.B. durch das Einspeisen von Blindleistung die Netzspannung am Anschlusspunkt erhöht werden, was stabilisierend wirken kann. Hierzu kann es vorteilhaft sein, zunächst nur Blindleistung einzuspeisen oder zu entnehmen.

Wenn die Blindleistung in Bezug auf den ersten Arbeitspunkt schneller eingestellt wird, als die Wirkleistung, bedeutet das, dass sich ein zweiter Arbeitspunkt bspw. dann einstellt, ggf. nur für kurze Zeit, wenn die Blindleistung den Wert des ersten Arbeitspunktes erreicht hat. In diesem Fall wäre die Wirkleistung des zweiten Arbeitspunktes gegenüber der Wirkleistung des ersten Arbeitspunktes reduziert.

Vorteilhaft ist auch ein Verfahren, das dadurch gekennzeichnet ist, dass zunächst die Blindleistung eingestellt wird, insbesondere auf den Wert des ersten oder zweiten Arbeitspunktes, um dadurch eine Netzstützung zu erreichen, und anschließend die Wirkleistung eingestellt, insbesondere erhöht wird, und/oder dass die Blindleistung und die Wirkleistung jeweils mittels einer zeitlichen Rampenfunktion eingestellt werden und die Rampenfunktion so gewählt sind, dass der Blindleistungswert des zweiten Arbeitspunktes eher erreicht wird, als der Wirkleistungswert des zweiten Arbeitspunktes und/oder dass der Blindleistungswert des ersten Arbeitspunktes eher erreicht wird, als der Wirkleistungswert des ersten Arbeitspunktes.

Es wird somit vorgeschlagen, gezielt erst die Blindleistung einzustellen, um eine Stabilisierung zu erreichen. Hierbei kann der zweite Arbeitspunkt durch eine hohe Blindleistungskomponente aber eine kleine Wirkleistungskomponente gekennzeichnet sein. Insbesondere kann hier die Wirkleistungskomponente null betragen.

Alternativ oder in Kombination erfolgt das Ändern der Blindleistung mit einer steileren Rampenfunktion als das Hochfahren der Wirkleistung. Die Steilheit der jeweiligen Rampenfunktionen bezieht sich auf den jeweiligen Endwert der Blindleistung bzw. Wirkleistung, insbesondere auf die Werte des ersten oder zweiten Arbeitspunktes.

Das Verfahren ist dadurch gekennzeichnet, dass beim Wiederaufnehmen der Einspeisung die eingespeiste Wirkleistung mit einem vorgegebenen Verlauf, insbesondere rampenförmig, erhöht wird, und dabei die eingespeiste Blindleistung begleitend so geführt wird, dass sie spannungsstabilisierend wirkt, wobei die Blindleistung insbesondere basierend auf einer zuvor aufgenommenen Netzcharakteristik des elektrischen Versorgungsnetzes geführt wird. Somit wird die Wirkleistung insbesondere entlang einer Rampe hochgefahren, um möglichst bald, aber mit genügend Zeit, um die Stabilität nicht zu gefährden, Leistung ins elektrische Versorgungsnetz einzuspeisen. Der Blindleistung kommt hierbei die Aufgabe zu, das Hochfahren der Wirkleistung stabilisierend zu begleiten. Die Blindleistung kann hierbei wesentlich dynamischer verändert werden, um die Stabilisierung zu erreichen.

Die Stabilisierung bezieht sich insbesondere auf die Spannung am Netzanschlusspunkt, die möglichst konstant und/oder in einem vorgegebenen Toleranzbereich gehalten werden soll. Vorzugsweise wird hierfür vorgeschlagen, zuvor

5

aufgenommene Netzcharakteristiken des angeschlossenen Versorgungsnetzes zu Grunde zu legen. Dadurch kann auch das Verhalten des Versorgungsnetzes am Netzanschlusspunkt zumindest teilweise bekannt sein und die Reaktion des Versorgungsnetzes am Netzanschlusspunkt, insbesondere die Reaktion der Spannung am Netzanschlusspunkt auf das geplante Hochfahren der Wirkleistung ist vorhersehbar. Dadurch kann die Blindleistung in Kenntnis der vorgeplanten Erhöhung der Wirkleistungseinspeisung gezielt geführt werden. Bspw. kann die Blindleistung basierend auf der geplanten Wirkleistungseinspeisung und der vorbekannten Netzcharakteristik gesteuert werden. Eine Regelung kann ergänzt werden,

Die Blindleistung kann dabei insbesondere auch so geführt werden, dass beim Hochfahren eine Stabilitätsgrenze eingehalten wird. Je nach gewählter Stabilitätsgrenze wird hierdurch auch ein zweiter Arbeitspunkt mit höherem Stabilitätsabstand als der erste Arbeitspunkt angesteuert.

Wird beim Wiederstart zunächst die Windenergieanlage mit reduzierter Leistung betrieben, kann sie einen Beitrag zur Leistungseinspeisung in das Versorgungsnetz leisten und dadurch das Netz mit stützen, ist zugleich aber in einem verhältnismäßig stabilen Arbeitspunkt.

Vorzugsweise erfolgt die Wiederaufnahme der Einspeisung innerhalb einer vorbestimmten Wiederaufnahmezeit nach der Unterbrechung, wobei vorzugsweise eine Wiederaufnahmezeit gewählt wird, die kleiner als 10 Sekunden ist. Vorzugsweise wird bei Wiederaufnahme innerhalb einer vorbestimmten Hochlaufzeit in den zweiten Arbeitspunkt hochgefahren. Um eine Netzstützung erreichen zu können, sollte somit die Anlage so schnell wie möglich wieder ins Netz einspeisen, wobei durch die Wahl des zweiten Arbeitspunktes trotz dieser schnellen Wiederaufnahme der Einspeisung diese stabil erfolgen kann und die Anlage nicht sofort wieder in einen instabilen Einspeisezustand kommt, der zuvor bereits zur Unterbrechung der Einspeisung gesorgt hat. Somit wird ein schnelles Wiedereinschalten und Stützten des Netzes bei gleichzeitiger Wahrung der Stabilität hierbei vorgeschlagen.

Gemäß einer Ausgestaltung wird vorgeschlagen, dass die Stabilitätsreserve als kleinste Differenz zwischen eingespeister Blindleistung und Blindleistung einer Stabilitätsgrenze ist. Die eingespeiste Blindleistung ist ein konkreter Wert, wohingegen eine Stabilitätsgrenze zumindest ein Verlauf ist. Somit ergeben sich von dem Wert der eingespeisten Blindleistung zu der Stabilitätsgrenze, also dem Verlauf einer solchen Grenze, unterschiedliche Differenzen. Die kleinste dieser Differenzen bildet gemäß diesem Vorschlag die Stabilitätsreserve. Mit anderen Worten ist die Stabilitätsreserve, anschaulich gesprochen, der kleinste Abstand zur Stabilitätsgrenze.

Gemäß einer weiteren Ausführungsform wird vorgeschlagen, dass die kleinste Differenz zwischen eingespeister Wirkleistung und Wirkleistung der Stabilitätsgrenze die Stabilitätsreserve ist.

Gemäß einer anderen Ausführungsform wird vorgeschlagen, dass eine kleinste Differenz zwischen der Spannung am Netzanschlusspunkt und der Spannung der Stabilitätsgrenze die Stabilitätsreserve ist.

Vorzugsweise kann sich die Stabilitätsreserve auch aus diesen Differenzen zusammensetzen. Vorzugsweise wird als Stabilitätsgrenze ein Zusammenhang zwischen einzuspeisender Wirkleistung und einzuspeisender Blindleistung zugrundegelegt, wie bspw. ein Verlauf der Wirkleistung in Abhängigkeit der Blindleisung. Als Stabilitätsreserve eines Arbeitspunktes, der insoweit durch seinen Wirkleistung- und Blindleistungsanteil beschrieben wird, kann der kleinste Abstand zu einer so definierten Stabilitätsgrenze verwendet werden. Mathematisch kann dies über die Methode der kleinsten Quadrate berechnet werden. Der kleinste Abstand zur Stabilitätsgrenze ergibt sich für den Punkt auf der Stabilitätsgrenze, bei dem die Wurzel aus der Summe des Quadrates der Blindleistungsdifferenz und des Quadrates der Wirkleistungsdifferenz am kleinsten ist.

Vorzugsweise kann die Stabilitätsgrenze eine Funktion der Netzspannung am Netzanschlusspunkt in Abhängigkeit der eingespeisten Blindleistung sein oder in Abhängigkeit der eingespeisten Wirkleistung, oder abhängig von beiden, wobei die Funktion bildlich gesprochen eine Fläche, insbesondere gekrümmte Fläche, einnehmen kann bzw. einnehmen wird. Diese gekrümmte Fläche wäre dann die Netzspannung am Netzanschlusspunkt in Abhängigkeit der eingespeisten Blindleistung und der eingespeisten Wirkleistung. Es ergäbe sich somit eine gekrümmte Fläche in einem Raum, der durch die Netzspannung am Netzanschlusspunkt, die eingespeiste Blindleistung und die eingespeiste Wirkleisung aufgespannt wird, insbesondere im Sinne eines kartesischen Raums.

Gemäß einer weiteren Ausgestaltung wird vorgeschlagen, dass die Unterbrechung der Einspeisung dann erfolgt, wenn am Netzanschlusspunkt ein Stabilitätsverlust des Versorgungsnetzes und/oder der Einspeisung in das Versorgungsnetz auftritt oder angezeigt wird. Insoweit wäre also bereits der Fall eingetreten, der möglichst vermieden werden soll, nämlich ein Stabilitätsverlust. Aus Sicht der Regelung wird dazu vorzugsweise ein Signal ausgewertet, das signalisiert, dass ein solcher Stabilitätsverlust des Versorgungsnetzes oder der Einspeisung auftritt.

Ein Unterbrechen kann auch oder alternativ durch einen Überstrom im Versorgungsnetz und/oder am Netzanschlusspunkt ausgelöst werden. Außerdem oder alternativ kann ein Fehler im Versorgungsnetz auftreten, insbesondere ein Kurzschluss, der erfasst wurde und somit zur Unterbrechung der Einspeisung führt.

Ergänzend oder alternativ kann auch eine Spannungsabsenkung im Versorgungsnetz und/oder am Netzanschlusspunkt zu einer Unterbrechung führen. Insbesondere ein Spannungsabsenken, wenn es einen vorbestimmten Wert unterschreitet, ist somit ein klarer Indikator für ein ernstes Problem im Netz. Grundsätzlich kann auch eine Spannungsüberhöhung ein Problem im Netz anzeigen und eine Unterbrechung erforderlich machen. Im Falle einer ungewollten Spannungserhöhung dürfte es aber häufig zweckmäßig sein, den Erzeuger zunächst nicht wieder zusätzliche Leistung ins Netz einspeisen zu lassen. Ggf. könnte das Einspeisen negativer Blindleistung der Netzspannung entgegenwirken.

Auch oder alternativ kann das Umschalten im Netz und/oder das Stufen von Transformatoren im Versorgungsnetz zu einer Unterbrechung führen, insbesondere wenn solche Umschaltungen oder Stufungen von Transformatoren, also insbesondere das Schalten sog. Stufentransformatoren, ein übliches Maß überschreitet.

Auch das Auftreten von Extremböen kann zu einer Unterbrechung der Einspeisung führen.

Gemäß einer Ausführungsform wird vorgeschlagen, dass beim Erfassen eines am Netzanschlusspunkt drohenden Stabilitätsverlustes und/oder beim Wiederaufnehmen der Einspeisung von einer Normalsteuerung auf eine Stabilisierungssteuerung umgeschaltet wird, die den Erzeuger im Vergleich zur Normalsteuerung mit höherer Stabilität steuert. Hierdurch soll verhindert werden, dass der drohende Stabilitätsverlust eintritt bzw. dass ein Wiederaufnehmen der Einspeisung zu einem erneuten Problem, insbesondere Stabilitätsverlust und insbesondere Unterbrechen der Einspeisung, führt.

Vorzugsweise wird bei dem beschriebenen drohenden Stabilitätsverlust oder beim Wiederaufnehmen der Einspeisung vorgeschlagen, die einzuspeisende Wirkleistung des Erzeugers auf einen Wert kleiner als der Maximalwert des Erzeugers zu beschränken, insbesondere auf einen Wert, der kleiner ist als eine Nennleistung des Erzeugers. Insbesondere durch eine solche Reduzierung der Wirkleistung auf einen kleineren Wert als den Maximalwert ergeben sich zum Einen eine Stabilitätsreserve und zum Anderen eine Regelungsreserve für den Erzeuger, insbesondere für eine Windenergieanlage, wenn diese den Erzeuger bildet.

Gemäß einer weiteren Ausführungsform wird vorgeschlagen, dass bei drohendem Stabilitätsverlust oder beim Wiederaufnehmen der Einspeisung für den Fall, dass der Erzeuger ein Windpark mit mehreren Windenergieanlagen ist, von einer Normalsteuerung auf eine zentrale Parksteuerung umgeschaltet. Es wird also in einem solchen Problemfall den Windenergieanlagen nicht mehr die Steuerung einzeln überlassen, sondern es wird eine zentrale Koordinierung der Windenergieanlagen, insbesondere hinsichtlich der Einspeisung, vorgeschlagen, um dadurch einem Stabilitätsverlust entgegenzuwirken.

Vorzugsweise wird die Umschaltung auf die Stabilisierungssteuerung, die Begrenzung der Wirkleistung und/oder die Verwendung der zentralen Parksteuerung beibehalten, bis erfasst wurde, dass ein Stabilitätsverlust nicht mehr droht. Hierbei steht somit im Vordergrund, die Windenergieanlage, den Windpark oder einen anderen Erzeuger primär im Hinblick auf Stabilität zu steuern und eine Reduzierung der Wirkleistungseinspeisung dabei in Kauf zu nehmen. Mit anderen Worten steht die Stabilisierung im Vordergrund und es wird sogar in Kauf genommen, im Falle der Verwendung einer Windenergieanlage oder eines Windparks im Wind erhaltene Energie zu verschenken.

Eine Umschaltung auf eine Stabilisierungssteuerung entspricht einer Umschaltung von dem ersten Arbeitspunkt auf den zweiten Arbeitspunkt. Ein Betreiben im zweiten Arbeitspunkt kann als Stabilisierungssteuerung bezeichnet werden.

Gemäß einer bevorzugten Ausgestaltung wird vorgeschlagen, dass nach dem Erfassen eines am Netzanschlusspunkt drohenden Stabilitätsverlustes und/oder nach dem Wiederaufnehmen der Einspeisung durch ein externes Signal von einer bzw. der Stabilisierungssteuerung eine bzw. die Steuerung des Erzeugers in eine bzw. die Normalsteuerung zurückgestellt wird und/oder eine bzw. die Begrenzung der eingespeisten Wirkleistung aufgehoben wird. Es wird somit vorgeschlagen, dass das Zurückstellen im Grunde in einen Normalzustand, der keine erhöhte Stabilisierung zugrundelegt, abhängig von einem externen Signal erfolgt. Bspw. kann eine Auswertevorrichtung ein solches externes Signal generieren oder es kann bspw. der Betreiber des elektrischen Versorgungsnetzes ein solches Signal bereitstellen. Durch die Auswertung eines solchen externen Signals kann verlässlicher und insbesondere auch bessere produzierbar das Zurückstellen in den Normalbetrieb durchgeführt werden. Hierdurch wird das Risiko minimiert, dass das Zurückstellen in den Normalbetrieb zu früh erfolgt, nämlich bevor das zuvor erkannte oder drohende Stabilitätsproblem tatsächlich behoben wurde.

Gemäß einer Ausführungsform wird vorgeschlagen, dass ein Windpark mit mehreren Windenergieanlagen vorgesehen ist, wobei jede Windenergieanlage einen Erzeuger bildet. Nach dem Unterbrechen der Einspeisung einer oder einiger Windenergieanlagen nehmen diese bzw. nimmt diese die Einspeisung individuell wieder auf. Insbesondere schaltet jede Windenergieanlage jeweils von einer Normalsteuerung auf eine Stabilisierungssteuerung um, die die jeweilige Windenergieanlage im Vergleich zur Normalsteuerung mit erhöhter Stabilität steuert. Insbesondere betrifft dies den Fall, bei dem eine Unterbrechung der Einspeisung nicht den Windpark komplett betrifft, sondern nur einige Windenergieanlagen. Hierfür kann es unterschiedliche Gründe geben, wie z.B. dass eine oder mehrere Windenergieanlagen aufgrund einer Extrembö die Einspeisung unterbrochen haben. Auch können Messungenauigkeiten dazu führen, dass einige Windenergieanlagen von einem Fall ausgehen, der eine Unterbrechung notwendig macht, wohingegen andere noch nicht unterbrechen müssen. Auch kann eine entfernte Anordnung zu leicht unterschiedlichen Voraussetzungen zwischen den Windenergieanlagen im Park führen, die ausreichend sind, dass die Anlagen auch unterschiedlich reagieren. Weiterhin können unterschiedliche Anlagentypen vorhanden sein, die unterschiedliche Kriterien zur Unterbrechung der Einspeisung zugrundelegen.

Jedenfalls wird hierfür vorgeschlagen, dass die Windenergieanlagen, die ihre Einspeisung unterbrochen haben, so schnell wie möglich wieder eingeschaltet werden und zwar in einem stabilen Zustand, um einem Kaskadeneffekt entgegenzuwirken. Es soll also verhindert werden, dass Windenergieanlagen, die noch nicht das Kriterium für eine Unterbrechung detektiert haben, nicht durch das Unterbrechen anderer Windenergieanlagen schließlich auch das Einspeisen unterbrechen müssen. Daher wird vorgeschlagen, die Windenergieanlagen, die das Einspeisen unterbrochen haben, so schnell wie möglich wieder einspeisen zulassen, aber in einem möglichst stabilen Arbeitspunkt.

Vorzugsweise erfolgt für eine oder mehrere Windenergieanlagen, die das Einspeisen unterbrochen haben, ein Wiederaufnehmen des Einspeisens noch bevor die zugrundeliegende Störung behoben ist, zumindest bevor die zugrundeliegende Störung vollständig behoben ist. Grundsätzlich kann beim Unterbrechen der Einspeisung aufgrund einer Störung erst wieder eingespeist werden, wenn diese Störung nicht mehr vorliegt. Aufgrund der vorgeschlagenen Einspeisung mit einem geänderten Arbeitspunkts ist es jedoch ggf. möglich, trotz noch vorliegender Störung, das Einspeisen wieder aufzunehmen. Dies betrifft insbesondere den Fall, bei dem das Unterbrechen so schnell erfolgte, dass nicht schon in einen stabileren Arbeitspunkt umgeschaltet werden konnte, um das Unterbrechen zu vermeiden.

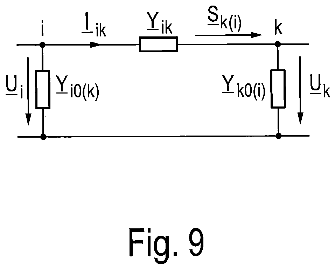

Eine nachfolgend beschriebene Lastflussrechnung wird für die Analyse von stationären Betriebszuständen von Energieversorgungsnetzen verwendet. Grundlage bildet dabei eine Abbildung des betreffenden Netzes durch seine Impedanzen Z bzw. Admittanzen Y (komplexe Leitwerte), die Fig. 9 zeigt.

In der klassischen Netzanalyse würde das Netz bestimmt werden durch das "ohmsche Gesetz" mit dem folgenden linearen Gleichungssystem in Matrix-Schreibweise, das einen Zusammenhang für n Knoten beschreibt.

$$
\begin{bmatrix}
\underline{Y}_{11} & \cdots & \underline{Y}_{12} & \underline{Y}_{1i} & \cdots & \underline{Y}_{1n} \\
\underline{Y}_{21} & \cdots & \underline{Y}_{22} & \underline{Y}_{2i} & \cdots & \underline{Y}_{2n} \\
\cdot & & \cdot & \cdot & & \cdot \\
\cdot & & \cdot & \cdot & & \cdot \\
\cdot & & \cdot & \cdot & & \cdot \\
\underline{Y}_{n1} & \cdots & \underline{Y}_{n2} & \underline{Y}_{ni} & \cdots & \underline{Y}_{nn}
\end{bmatrix}
\begin{bmatrix}
\underline{U}_1 \\
\underline{U}_2 \\
\cdot \\
\cdot \\
\cdot \\
\underline{U}_n
\end{bmatrix}
=
\begin{bmatrix}
\underline{I}_1 \\
\underline{I}_2 \\
\cdot \\
\cdot \\
\cdot \\
\underline{I}_n
\end{bmatrix}
$$

oder kurz: $\mathbf{Y} \cdot \mathbf{U} = \mathbf{I}$ (lineares Gleichungssystem).

Gesucht sind dabei die Spannungen an jedem der n Netzknoten (→Spannungshaltung).

Da aber die Ströme in den Netzen unbekannt sind, aber die (geplanten) Einspeisungen bzw. Abnahmen bekannt, werden die Ströme durch Leistungen ausgedrückt.

$$
\underline{I}_{ii} = \frac{\underline{S}_i^*}{\underline{U}_i^*} = \frac{P_i - jQ_i}{\underline{U}_i^*}
$$

Durch die Darstellung der Netzgleichungen über Leistungen entsteht jetzt ein nichtlineares Gleichungssystems.

$$
\underline{S}_i^* = P_i - jQ_i = \underline{Y}_{i1}\underline{U}_1\underline{U}_i^* + \underline{Y}_{i2}\underline{U}_2\underline{U}_i^* \ldots = \underline{U}_i^* \sum_{k=1}^{n} \underline{Y}_{ik}\underline{U}_k
$$

Gelöst wird dieses nichtlineare Gleichungssystem numerisch (meist mit einem Newton Verfahren). Im Rahmen der numerischen Lösung des Gleichungssystems, muss dieses linearisiert werden. Die Linearisierung erfolgt durch die partiellen Ableitungen der Matrixelemente nach den Unbekannten, nämlich hier noch der Amplitude ($U_2...U_n$ und dem Winkel ($\delta_2...\delta_n$) der Knotenspannungen.

Die Matrix mit den partiellen Ableitungen wird Jacobi- Matrix genannt. Zur Lösung des GS muss diese invertierbar also regulär sein.

$$
\begin{bmatrix} \Delta P_2^{(0)} \\ \vdots \\ \Delta P_n^{(0)} \\ \vdots \\ \Delta Q_2^{(0)} \\ \vdots \\ \Delta Q_n^{(0)} \end{bmatrix} = \begin{bmatrix} \left(\frac{\partial P_2}{\partial \delta_2}\right)^{(0)} & \cdots & \left(\frac{\partial P_2}{\partial \delta_n}\right)^{(0)} & \left(\frac{\partial P_2}{\partial U_2}\right)^{(0)} & \cdots & \left(\frac{\partial P_2}{\partial U_n}\right)^{(0)} \\ \vdots & & \vdots & \vdots & & \vdots \\ \left(\frac{\partial P_n}{\partial \delta_2}\right)^{(0)} & \cdots & \left(\frac{\partial P_n}{\partial \delta_n}\right)^{(0)} & \left(\frac{\partial P_n}{\partial U_2}\right)^{(0)} & \cdots & \left(\frac{\partial P_n}{\partial U_n}\right)^{(0)} \\ \left(\frac{\partial Q_2}{\partial \delta_2}\right)^{(0)} & \cdots & \left(\frac{\partial Q_2}{\partial \delta_n}\right)^{(0)} & \left(\frac{\partial Q_2}{\partial U_2}\right)^{(0)} & \cdots & \left(\frac{\partial Q_2}{\partial U_n}\right)^{(0)} \\ \vdots & & \vdots & \vdots & & \vdots \\ \left(\frac{\partial Q_n}{\partial \delta_2}\right)^{(0)} & \cdots & \left(\frac{\partial Q_n}{\partial \delta_n}\right)^{(0)} & \left(\frac{\partial Q_n}{\partial U_2}\right)^{(0)} & \cdots & \left(\frac{\partial Q_n}{\partial U_n}\right)^{(0)} \end{bmatrix} \begin{bmatrix} \Delta \delta_2^{(0)} \\ \vdots \\ \Delta \delta_n^{(0)} \\ \vdots \\ \Delta U_2^{(0)} \\ \vdots \\ \Delta U_n^{(0)} \end{bmatrix}
$$

Jacobi- Matrix

Nachfolgend wird die Erfindung anhand von Ausführungsbeispielen unter Bezugnahme auf die begleitenden Figuren beispielhaft näher erläutert.

Fig. 1      zeigt eine Windenergieanlage in einer perspektivischen Ansicht.

Fig. 2      zeigt schematisch eine an ein Netz angeschlossene Windenergieanlage, basierend auf einem Spannungssteuersystem, das auch als "Voltage Control System" oder kurz VCS bezeichnet wird.

Fig. 3      zeigt schematisch eine Schaltungsanordnung einer spannungsgesteuerten Einspeisung einer Windenergieanlage in ein Wechselspannungsnetz.

Fig. 4      zeigt schematisch zwei über einen gemeinsamen Netzanschlusspunkt an ein Netz angeschlossene Windenergieanlage.

Fig. 5      veranschaulicht Einflussgrößen, die die Sensitivität einer an ein Netz angeschlossenen Windenergieanlage beeinflussen können.

Fig. 6      zeigt ein Diagramm als Auswertung des Verhaltens eines Netzes am Netzanschlusspunkt als Spannungsverläufe in Abhängigkeit der eingespeisten Blindleistung und eingespeisten Wirkleistung.

Fig. 7      zeigt eine Sensitivität als durch Änderungen der Wirkleistung bedingte Spannungsänderung in Abhängigkeit der eingespeisten und normierten Blindleistung und Wirkleistung.

Fig. 8      zeigt eine Sensitivität als durch Änderung der Blindleistung bedingte Spannungsänderung in Abhängigkeit der normierten Blindleistung und Wirkleistung.

Fig. 9      zeigt eine verallgemeinernde Netzabbildung.

Fig. 10      zeigt ein Diagramm, das einen Stabilitätsverlust mit einer Wiederaufnahme einer Einspeisung in einem veränderten Arbeitspunkt veranschaulicht.

Nachfolgend können identische Bezugszeichen für ähnliche aber nicht identische Elemente vorgesehen sein oder sie können auch für Elemente vorgesehen sein, die nur schematisch oder symbolisch dargestellt sind und sich in Details unterscheiden können, die für die jeweilige Erläuterung aber nicht relevant sind.

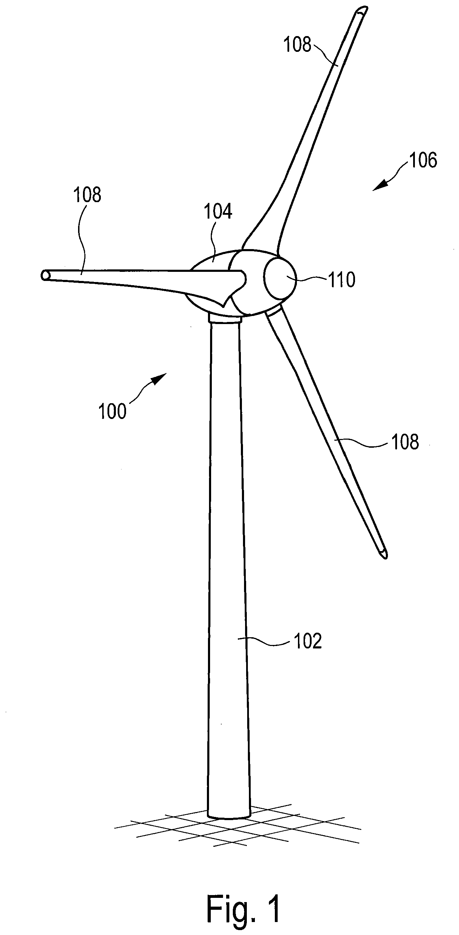

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

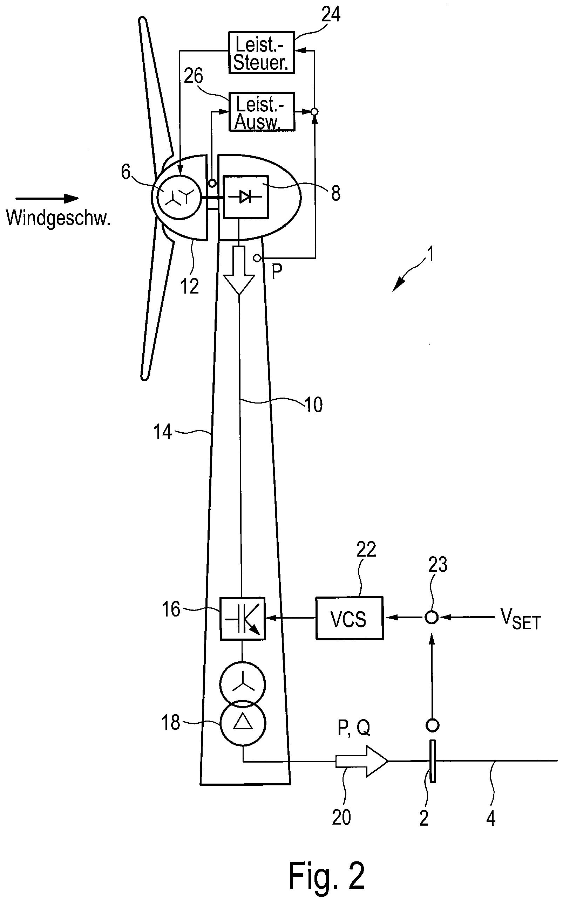

Fig. 2 zeigt schematisch eine Windenergieanlage 1, die über einen Netzanschlusspunkt 2 an ein elektrisches Versorgungsnetz 4 angeschlossen ist. Das elektrische Versorgungsnetz 4 wird vereinfachend auch als Netz 4 oder Netzwerk 4 nachfolgend bezeichnet, wobei diese Begriffe als Synonyme anzusehen sind.

Die Windenergieanlage 1 weist einen Generator 6 auf, der durch den Wind betrieben wird und dadurch elektrische Energie erzeugt. Der Generator 6 ist in einer Ausführungsform als elektrisch erregter Mehrphasen-Synchrongenerator 6 mit zwei jeweils sternförmig verschalteten 3-Phasensystemen ausgebildet, was durch die beiden Sternsymbole in dem Generator 6 der Fig. 2 veranschaulicht wird. Der so erzeugte Wechselstrom, nämlich in dem genannten Beispiel 6-phasige Wechselstrom, wird mit einem Gleichrichter 8 gleichgerichtet und als Gleichstrom über eine entsprechende Gleichstromleitung 10, die mehrere Einzelleitungen umfassen kann, von der Gondel 12 den Turm 14 herunter zu einem Wechselrichter 16 übertragen. Der Wechselrichter 16 erzeugt aus dem Gleichstrom einen Wechselstrom, nämlich in dem gezeigten Beispiel einen 3-phasigen Wechselstrom zum Einspeisen in das Netz 4. Hierzu wird die vom Wechselrichter 16 erzeugte Wechselspannung noch mittels eines Transformators 18 hochtransformatiert, um dann am Netzanschlusspunkt 2 in das Netz 4 eingespeist zu werden. Der gezeigte Transformator 18 verwendet eine Stern-Dreiecksschaltung, nämlich primärseitig eine Sternschaltung und sekundärseitig eine Dreiecksschaltung, was hier nur als ein Beispiel einer Ausführungsform dargestellt ist. Die Einspeisung in das Netz 4 kann neben der Einspeisung von Wirkleistung P auch die Einspeisung von Blindleistung Q beinhalten, was durch den Wirkpfeil 20 veranschaulicht wird. Für die konkrete Einspeisung wird der Wechselrichter 16 durch eine entsprechende Steuereinheit 22 angesteuert, wobei die Steuereinheit 22 auch baulich mit dem Wechselrichter 16 vereint sein kann. Überhaupt soll die Fig. 2 den grundsätzlichen Wirkaufbau veranschaulichen und die konkrete Anordnung einzelner Elemente kann auch anders als dargestellt gewählt werden. Bspw. kann der Trafo 18 außerhalb des Turms 14 vorgesehen sein.

Die Steuereinheit 22 steuert den Wechselrichter 16 insbesondere so an, dass die Art und Weise der Einspeisung in das Netz 4 gesteuert wird. Dabei werden Aufgaben wahrgenommen wie den einzuspeisenden Strom an die Situation im Netz 4, insbesondere Frequenz, Phase und Amplitude der Spannung im Netz 4 anzupassen. Außerdem ist die Steuereinheit 22 dazu vorgesehen, den Anteil von Wirkleistung P und Blindleistung Q der aktuell in das Netz 4 eingespeisten Leistung zu steuern. Hier werden Messungen im Netz 4, insbesondere am Netzanschlusspunkt 2 vorgenommen und entsprechend ausgewertet. Unter anderem wird auch die aktuelle Spannung im Netz 4, insbesondere in Form des aktuellen Effektivwertes der Spannung, gemessen und mit einem Vorgabewert für die Spannung, nämlich dem Vorgabewert $V_{SET}$ verglichen.

Entsprechend stellt das dargestellte System und insbesondere der Wechselrichter 16 mit der Steuereinheit 22 ein Spannungssteuersystem dar, das auch im deutschen Sprachgebrauch als "Voltage Control System", abgekürzt VCS, bezeichnet wird.

Für die Steuerung des Generators der Windenergieanlage sind im Bereich der Gondel ein Leistungssteuerblock 24 und ein Leistungsauswerteblock 26 vorgesehen. Der Leistungssteuerblock 24 steuert insbesondere die Erregung, nämlich den Erregerstrom, des fremderregten Synchrongenerators im Beispiel der gezeigten Ausführung. Der Leistungsauswerteblock 26 wertet die dem Gleichrichter 8 zugeführte Leistung aus und vergleicht sie mit der vom Gleichrichter 8 über die Gleichstromleitungen 10 zum Wechselrichter 16 abgegebene Leistung. Das Ergebnis dieser Auswertung wird weiter an den Leistungssteuerblock 24 gegeben.

Die Fig. 2 veranschaulicht auch, dass für eine entsprechend intelligente Einspeisung das gezeigte System mit einem Spannungssteuersystem versehen sein sollte, um die Windenergieanlage beim Einspeisen möglichst stabil zu betreiben, insbesondere in der Nähe einer Stabilitätsgrenze zu betreiben.

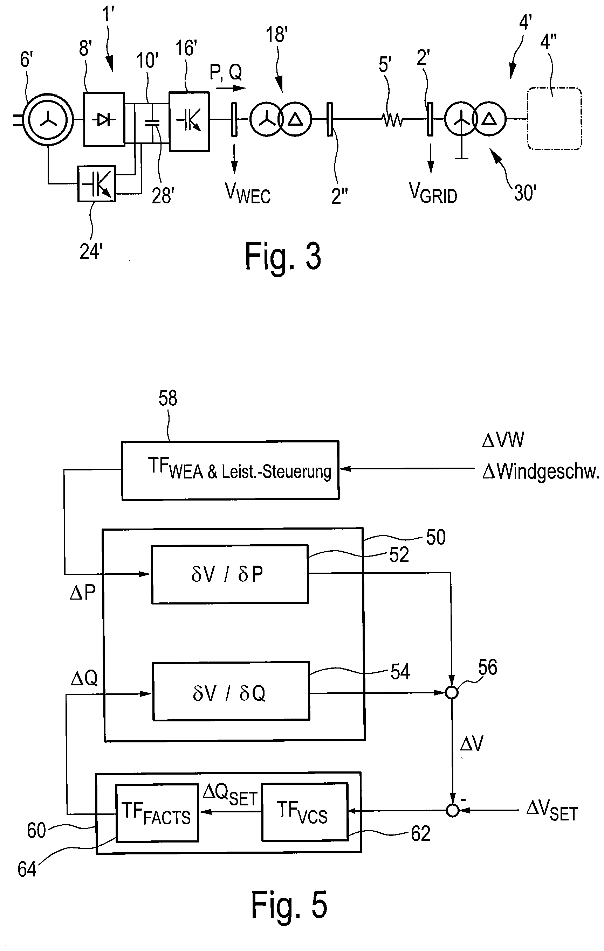

Fig. 3 veranschaulicht den Anschluss einer Windenergieanlage 1' an ein sog. "schwaches Netz 4". Unter einem schwachem Netz ist hier ein Netz mit hoher Impedanz zu verstehen. Das wird in der Fig. 3 durch eine Serien-Impedanz 5' veranschaulicht. Außerdem ist eine solche Serien-Impedanz 5' in einem Testaufbau vorgesehen gewesen, die der Struktur der Fig. 3 entspricht und mit der das Verhalten der Windenergieanlage 1' an dem schwachen Netz 4' untersucht wurde.

Die Struktur der Fig. 3 geht von einem Generator 6' aus, der vom Wind angetrieben wird und als Synchrongenerator vorgesehen ist. Die erzeugte elektrische Leistung des Generators 6' wird in einem Gleichrichter 8' gleichgerichtet und einem Wechselrichter 16' eingangsseitig an einem Gleichspannungszwischenkreis mit einem Zwischenkreiskondensator 28' bereitgestellt. Die gezeigte Struktur setzt eine Gleichspannungsleitung 10' mit dem eingangsseitigen Gleichspannungszwischenkreis des Wechselrichters 16' gleich, um die Darstellung zu vereinfachen. Tatsächlich kann eine eingangsseitige Gleichstromleitung mit einem Zwischenkreis elektrisch identisch sein, oder es ist eingangsseitig noch ein Hochsetzsteller vorgesehen, was hier nicht im Detail ausgeführt wird. Auch kann der Gleichrichter 1' und der Wechselrichter 16' räumlich voneinander getrennt sein, wie bereits in der Fig. 2 zu dem Gleichrichter 8 und dem Wechselrichter 16 erläutert wurde.

Schließlich ist eine Erregersteuerung 24' vorgesehen, die aus Energie des Gleichspannungszwischenkreises, der durch den Zwischenkreiskondensator 28' repräsentiert wird, gespeist werden kann. Diese Erregersteuerung 24' steuert den Erregerstrom des fremderregten Generators 6' und entspricht im Grunde dem Leistungssteuerblock 24 der Fig. 2.

Der Wechselrichter 16' kann Wirkleistung P und/oder Blindleistung Q einspeisen. Dabei ist in der Fig. 3 die Spannung am Ausgang des Wechselrichters 16' als Spannung der Windenergieanlage $V_{WEC}$ angegeben. Zur Einspeisung wird diese über den Transformator 18' hochtransformiert und am Netzanschlusspunkt 2' ins Netz 4' eingespeist. Das Netz 4' weist hier auch einen weiteren Netztransformator 30' auf. Das eigentliche Netz, das nach dem Netztrafo 30' beginnt, ist mit dem Bezugzeichen 4" gekennzeichnet. Die Spannung am Netzanschlusspunkt 2' wird als Netzspannung $V_{Grid}$ bezeichnet.

Zur Veranschaulichung des schwachen Netzes ist die Serien-Impedanz 5' vor dem Netzanschlusspunkt 2' eingezeichnet. Diese Serien-Impedanz 5' ist nur in diesem Testaufbau bzw. veranschaulichenden Aufbau vorhanden und gibt die Netzimpedanz an. Daher kann auch der unmittelbar neben dem Trafo 18' gezeichnete Punkt als Netzanschlusspunkt 2" angesehen werden. Die Unterscheidung zwischen diesen beiden Netzanschlusspunkten 2' und 2" ergibt sich nur durch diese Verwendung der Serien-Impedanz 5' und ist ansonsten in realen Netzen so nicht vorzufinden.

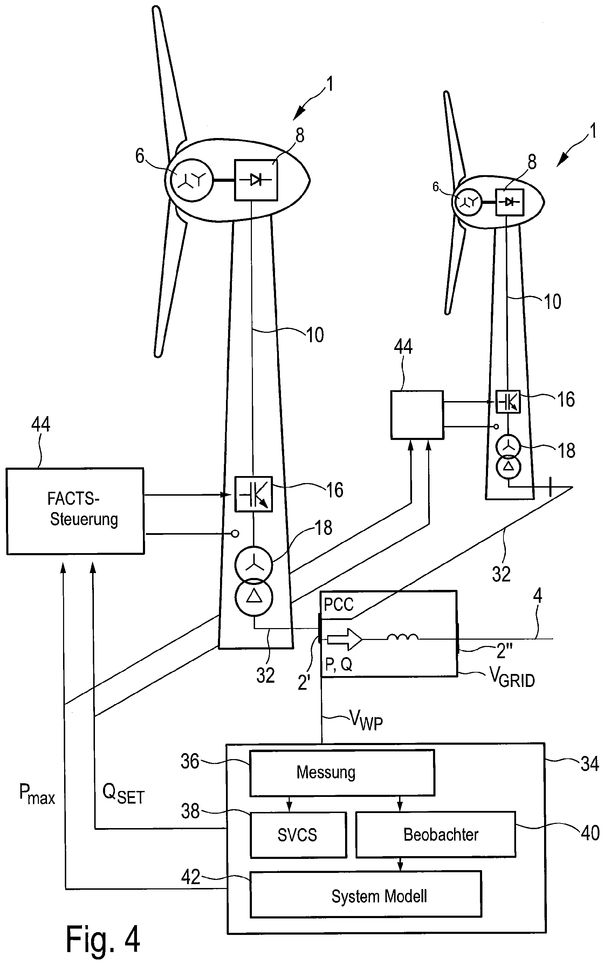

Fig. 4 zeigt eine weitere veranschaulichende und schematische Darstellung, gemäß der zwei Windenergieanlagen 1 an ein Versorgungsnetz 4 angeschlossen sind. Jede der Windenergieanlage 1 ist dabei dem Grunde nach wie in Fig. 2 erläutert aufgebaut, nämlich mit einem Generator 6, einem Gleichrichter 8 und einer Gleichstromleitung 10, die tatsächlich mindestens zwei einzelne Leitungen, nämlich für positiven und negativen Strom, aufweist, was entsprechend auch für die Gleichstromleitung 10 der Fig. 2 zutrifft. Weiterhin weist die Windenergieanlage 1 einen Wechselrichter 16 und einen Trafo 18 auf. Von jeder der beiden Windenergieanlagen 1 verläuft dann eine Anschlussleitung 32 zu einem bzw. dem windenergieanlagenseitigen Netzanschlusspunkt 2'. Somit speisen diese beiden exemplarisch gezeigten Windenergieanlagen 1, die auch repräsentativ für einen Windpark mit weit mehr als Windenergieanlagen stehen können, ihre erzeugte Leistung gemeinsam an diesem windenergieanlagenseitigem Netzanschlusspunkt 2' ein. Die eingespeiste Leistung P und eingespeiste Blindleistung Q, falls vorhanden, wird dann dem netzseitigen Anschlusspunkt 2' zugeführt und ins elektrische Versorgungsnetz 4 eingespeist.

Die Verbindung zwischen dem windenergieanlagenseitigen Netzanschlusspunkt 2' und dem netzseitigen Anschlusspunkt 2" ist nicht vernachlässigbar und entsprechend stellt sich eine windenergieanlagenseitige Spannung $V_{WP}$ am windenergieanlagenseitigen Netzanschlusspunkt 2' ein, wohingegen sich am netzseitigen Anschlusspunkt 2" die Spannung $V_{Grid}$ einstellt.

Zur Steuerung wird die windenergieanlagenseitige Spannung $V_{WP}$ erfasst und in einem Auswerteblock 34 ausgewertet. Die Auswertung erfolgt zunächst so, dass Messwerte mit dem Messblock 36 aufgenommen werden. Die Messergebnisse werden u.a. dem Stabilitätssteuerblock 38 zugeführt, der auch als SVCS-Block bezeichnet werden kann, wobei SVCS aus einer Abkürzung für den englischen Begriff "Stability Voltage Control System" abgeleitet ist. Der Stabilitätssteuerblock 38 berechnet eine Vorgabe für die bereitzustellende Blindleistung $Q_{Set}$. Diese einzustellende Blindleistung wird als entsprechender Vorgabewert an beide Windenergieanlagen 1 übergeben, und würde entsprechend an alle Windenergieanlagen in einem Betrag übergeben werden. Dieser Vorgabewert kann als Absolutwert übergeben werden, insbesondere dann, wenn die Windenergieanlagen 1 die gleiche Größe aufweisen und demselben Wind ausgesetzt sind. Es kann aber auch als Vorgabewert bspw. ein prozentualer Wert ausgegeben werden, der sich auf Eigenschaften der jeweiligen Windenergieanlage bezieht, wie bspw. die Nennleistung der betreffenden Windenergieanlage.

Weiterhin gibt der Messblock 36 Werte weiter an den Beobachterblock 40, der aus den ermittelten Messwerten weitere Zustände ermittelt, wie bspw. die eingespeiste Wirkleistung oder eingespeiste Blindleistung, und seine Ergebnisse weiter an den Systemmodelblock 42 weitergibt. Der Beobachterblock 40 kann ggf. auch Informationen über einen Leistungsbedarf ermitteln oder ableiten.

Das Systemmodel des Systemmodelblocks 42 wird dann dazu verwendet, eine maximal einzuspeisende Wirkleisung $P_{max}$ zu bestimmen und den Windenergieanlagen 1 zuzuleiten. Auch diese maximal einzuspeisende Wirkleistung kann als Absolutwert oder Relativwert ausgegeben werden. Es wird darauf hingewiesen, dass die Veranschaulichung des Auswerteblocks 34 die Struktur verdeutlichen soll. Grundsätzlich ist es nicht erforderlich, dass der Auswerteblock 34 körperlich als eigenständiges Gerät ausgebildet ist.

Die vorgegebene Blindleistung $Q_{set}$ und die maximale Wirkleisung $P_{max}$ werden dann an den FACTS-Steuerblock 44 jeder Windenergieanlage 1 gegeben. Die Bezeichnung "FACTS" ist auch im deutschen Sprachgebrauch üblich und ist eine Abkürzung für "Flexible AC Transmission System". Der FACTS-Steuerblock 44 setzt dann die Vorgabewerte um und steuert entsprechend den Wechselrichter 16 an, wobei er hierfür auch Messwerte von Zuständen aus der Windenergieanlage mit berücksichtigen kann.

Insbesondere, aber nicht nur, können stabilitätsrelevante Vorgaben für ein stabiles Einspeisen in das Netz 4 durch den Auswerteblock 34 realisiert werden. Insbesondere kann ein Arbeitspunkt vorgegeben werden, der hinsichtlich einzuspeisender Energiemenge bzw. Leistungshöhe und Stabilität günstig ist. Insbesondere kann ein Arbeitspunkt mit einer Stabilitätsreserve hierbei vorgegeben werden. Eine Stabilitätsreserve hinsichtlich einzuspeisender Blindleistung kann hierbei der Stabilitätssteuerblock 38 durch eine entsprechende Vorgabe der Blindleistung $Q_{set}$ erreichen.

Fig. 5 veranschaulicht die Sensitivität einer ans Netz angeschlossenen Windenergieanlage und die Einflussgrößen hierzu. Repräsentativ für das Verhalten des Netzes, nämlich am Netzanschlusspunkt ist der Netzblock 50 der Fig. 5 angegeben. Der Netzblock 50 veranschaulicht, dass das Netz durch eine Spannungsänderung auf Einflüsse reagieren kann. Als Einflüsse sind hier Änderungen der Wirkleistung $\Delta P$ und Änderung der Blindleistung $\Delta Q$ veranschaulicht. Den Einfluss von Leistungsänderungen berücksichtigt der Wirkleistungsblock 52 und den Einfluss von Änderungen der Blindleistung berücksichtigt der Blindleistungsblock 54. Der Wirkleistungsblock 52 zeigt eine partielle Ableitung der Spannung nach der Wirkleistung und entsprechend zeigt der Blindleistungsblock 54 eine partielle Ableitung der Spannung nach der Blindleistung. Das ist eine Möglichkeit, die jeweilige Dynamik des Netzverhaltens, also der Netzsensitivität, nämlich Reaktionen auf Änderungen der Wirkleistung und der Blindleistung über entsprechend partielle Ableitungen zu berücksichtigen, deren Ergebnis in dem Summierblock 56 aufaddiert werden. Der Netzblock 50 zusammen mit dem Summierblock 56 berücksichtigt somit eine Abhängigkeit der Spannung des Netzes am Netzanschlusspunkt von zwei Größen, nämlich von der Wirkleistung und von der Blindleistung. Die Abhängigkeit wird hier über die beiden partiellen Ableitungen berücksichtigt.

Änderungen der Wirkleistung ergeben sich insbesondere aus Änderungen der Windgeschwindigkeit $\Delta VW$, die auf den Windenergieanlagenblock 58 wirkt. Dieser Windenergieanlagenblock 58 verdeutlicht den Einfluss der Änderung der Windgeschwindigkeit $\Delta VW$ auf die Änderung der Wirkleistung $\Delta P$, wobei aber auch die Steuerung der Windenergieanlage berücksichtigt werden muss und mit diesem Block 58 berücksichtigt wird.

Die Änderung der Blindleistung $\Delta Q$ kann zwar auch von der Windenergieanlage, zumindest der Steuerung der Windenergieanlage abhängen, folgt aber anderen im Wesentlichen von der Windgeschwindigkeit unabhängigen Zusammenhängen. Ihre Änderung wird durch den Steuerungsblock 60 veranschaulicht. Dieser Steuerungsblock 60 ist dabei zur Erläuterung unterteilt in den Blindleistungsvorgabeblock 62 und den FACTS-Block 64. Der Steuerungsblock 60 und damit der Blindleistungsvorgabeblock 62 sind zunächst abhängig von einer Spannungsabweichung $\Delta V$, nämlich am Netzanschlusspunkt, abzüglich einer vorgegebenen Spannungsabweichung $\Delta V_{SET}$. Von dieser resultierenden Spannungsabweichung ausgehend, bestimmt der Blindleistungsvorgabeblock 62 eine einzuspeisende Blindleistung bzw. abhängig von einer Spannungsänderung eine vorgegebene Änderung der einzuspeisenden Blindleistung. Dies wird an den FACTS-Block 64 übergeben, der entsprechend eine Umsetzung der Einspeisung der Blindleistung bzw. der Änderung der Einspeisung der Blindleistung realisiert.

Der Windenergieanlagenblock 58 und der Steuerungsblock 60 können auch als Übertragungsfunktion der jeweiligen Eingangsgröße verstanden werden bzw. der Blindleistungsvorgabeblock 62 und der FACTS-Block 64 können jeweils als einzelne Übertragungsfunktionen verstanden werden, die in dem Steuerungsblock 60 verkettet sind.

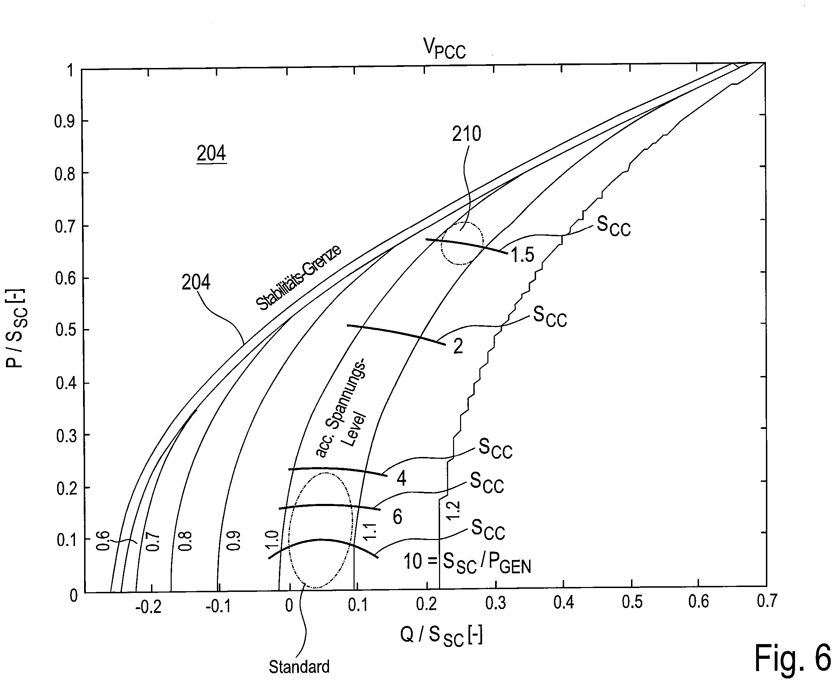

Fig. 6 zeigt für eine Ausführungsform eine Abhängigkeit der Spannung am Netzanschlusspunkt in Abhängigkeit der eingespeisten Blindleistung Q und der eingespeisten Wirkleistung P. Die Blindleistung Q ist auf die Kurzschlussleistung $S_{SC}$ des Netzes an dem untersuchten Netzanschlusspunkt normiert und an der Abszisse aufgetragen. Die Leistung P ist ebenfalls auf die Kurzschlussleistung $S_{SC}$ desselben Netzanschlusspunktes normiert und an der Ordinate aufgetragen. Die Spannung $V_{PCC}$ ist die Spannung am Netzanschlusspunkt normiert auf die Nennspannung $V_N$. Diese normierte Spannung am Netzanschlusspunkt ist für unterschiedliche Werte jeweils als Graph in Abhängigkeit der normierten Blindleistung Q und der normierten Wirkleistung P aufgetragen. Entsprechend ist der Graph bzw. die Kennlinie mit dem Wert 1 diejenige Kennlinie, die darstellt, bei welchen Werten für Blindleistung und Wirkleistung sich Nennspannung einstellt.

Bspw. stellt sich Nennspannung ein, wenn bezogen auf die Kurzschlussleistung $S_{SC}$ 10 % Blindleistung Q und 50 % Wirkleistung P eingespeist wird.

Die Graphik der Fig. 6 zeigt Eigenschaften eines Netzanschlusspunktes eines Netzes mit hoher Impedanz, jedenfalls bezogen auf diesen Netzanschlusspunkt.

Üblicherweise würde für den dargestellten Netzanschlusspunkt des beispielhaften Netzes eine Einspeisung etwa in dem Standardbetriebsbereich 200 erfolgen. Es würde also eine Einspeisung mit einer Wirkleistung P von etwa 10 % der Kurzschlussleistung $S_{SC}$ erfolgen mit Einspeisung von etwa 5 % Blindleistung der Kurzschlussleistung $S_{SC}$. Unter der idealisierenden Annahme, dass die eingespeiste Wirkleistung P der Nennleistung bzw. Anschlussleistung des Generators bzw. der Summe der an dem Netzanschlusspunkt angeschlossenen Generatoren entspricht, wäre die Einspeisung von 10 % der Kurzschlussleistung $S_{SC}$ gleichbedeutend damit, dass die Anschlussleistung $P_{Gen}$ 10% der Kurzschlussleistung $S_{SC}$ beträgt. Es liegt also ein Kurzschlussstromverhältnis Scr = $S_{SC}/P_{Gen}$ von etwa 10 vor. Das entspricht etwa dem Mittelpunkt des dargestellten Standardbetriebsbereichs 200. In der Fig. 6 sind zur Orientierung weitere Kurzschlussstromverhältnisse Scr als kurze Striche eingezeichnet, nämlich für die Werte für Scr von 10; 6; 4; 2 und 1, 5.

Erfindungsgemäß wird aber vorgeschlagen, deutlich mehr Wirkleistung P einzuspeisen, nämlich im Bereich von 60 bis 70 % der Kurzschlussleisung $S_{SC}$. Entsprechend ist hierfür die Einspeisung von 20 bis 30 % Blindleistung Q bezogen auf die Kurzschlussleistung $S_{SC}$ vorzusehen, um die Spannung am Netzanschlusspunkt im Bereich von 100 bis 110 % der Nennspannung zu halten. Es wird hier vorsorglich darauf hingewiesen, dass das Einspeisen von 110 % der Nennspannung am Netzanschlusspunkt nicht bedeutet, dass am Verbraucher eine erhöhte Spannung von 110 % messbar ist. Zum Einen liegt üblicherweise noch ein nicht zu vernachlässigender Netzabschnitt zwischen Netzanschlusspunkt und erstem relevanten Verbraucher, zum Anderen können im Netz auch bspw. Stufentransformatoren vorgesehen sein, die in gewissen Grenzen einen Ausgleich vornehmen können. Auf die hier sich anschließenden Maßnahmen, die sehr individuell vom Netz einschließlich Verbraucher und Erzeuger und diversen anderen Randbedingungen abhängen, kann im Rahmen dieser Anmeldung nicht eingegangen werden. Die notwendigen Maßnahmen sind dem Fachmann grundsätzlich geläufig.

Dieser vorgeschlagene Bereich ist in der Fig. 6 als erhöhter Betriebsbereich 210 eingezeichnet. Bei diesem erhöhten Betriebsbereich liegt etwa ein Kurzschlussstromverhältnis Scr von 1,5 vor. Bei einem solchen Kurzschlussstromverhältnis wurde bisher kein nennenswerter Erzeuger an das Netz angeschlossen.

Die Darstellung der Fig. 6 ist das Ergebnis einer Netzanalyse des zugrundeliegenden Netzes bezogen auf den betrachteten Netzanschlusspunkt. Hierfür wurde, wie eingangs erläutert wurde, eine Analyse der relevanten Elemente im Netz vorgenommen und jeweils durch Lösen der Jacobi-Matrix ermittelt. Dabei ergibt sich die vorliegende Darstellung der Fig. 6, demnach vereinfacht ausgedrückt die Kennlinien nach rechts, also mit höherer eingespeister Blindleistung Q auch zunehmende Spannungen am Netzanschlusspunkt wiedergeben. Mit abnehmender Blindleistung Q, also nach links, nimmt die Spannung am Netzanschlusspunkt ab. Dabei kann die Blindleistung Q nicht beliebig abnehmen und bei zu kleiner (bereits negativer) Blindleistung Q, wird, je nach zugehöriger Wirkleistung P, die Jacobi-Matrix singulär, also im mathematischen Sinne nicht lösbar. Eine singuläre Jacobi-Matrix bedeutet, dass ein instabiler Zustand vorliegt. Entsprechend ergibt sich eine Stabilitätsgrenze 202, die entsprechend am linken Rand der Darstellung der Fig. 6 eingezeichnet ist. Der Bereich, der links von der Stabilitätsgrenze 202 liegt, also jeweils eine höhere Wirkleistung P und/oder eine niedrigere Blindleistung Q aufweist, ist der instabile Bereich 204. Rein vorsorglich wird darauf hingewiesen, dass die Stabilitätsgrenze 202 nicht mit einer einzelnen Kennlinie eines Spannungswertes am Netzanschlusspunkt zusam-menfällt, sondern vielmehr die Kennlinienschar zu schneiden scheint. Tatsächlich kann die Kennlinienschar nicht geschnitten werden, weil jenseits der Stabilitätsgrenze 202 keine Werte und damit auch Kennlinienschar vorliegen.

Der nun bevorzugte Betriebsbereich, nämlich der erhöhte Betriebsbereich 210, hat zunächst einmal einen geringeren Abstand zu Stabilitätsgrenze 202, als der Standardbetriebsbereich 200. Dabei ist aber zu beachten, dass bisher konkrete Überlegungen und Analysen hinsichtlich der Netzeigenschaften, wie sie die Fig. 6 wiedergibt, nicht vorgenommen wurden. Insbesondere war nicht oder zumindest nicht in der gezeigten Qualität und gezeigten Quantität der Fig. 6 der Abstand zu einer Stabilitätsgrenze, wie sie in Fig. 6 als Stabilitätsgrenze 202 eingezeichnet ist, bekannt. Vielmehr hat man sich bei der Installation von Großkraftwerken an dem Kriterium des Kurzschlussstromverhältnisses orientiert und dieses möglichst groß, vorzugsweise über oder sogar deutlich über 10 gewählt. Kleine Erzeuger wie Windenergieanlagen wiederum sind bisher üblicherweise an starke Netze angeschlossen worden, die ohne Weiteres den Anschluss einer weiteren Windenergieanlage verkraften konnten. Im Ergebnis erfolgte auch da ein Anschluss, sei es nun gewollt oder ungewollt, mit hohem Kurzschlussstromverhältnis $S_{SC}$.

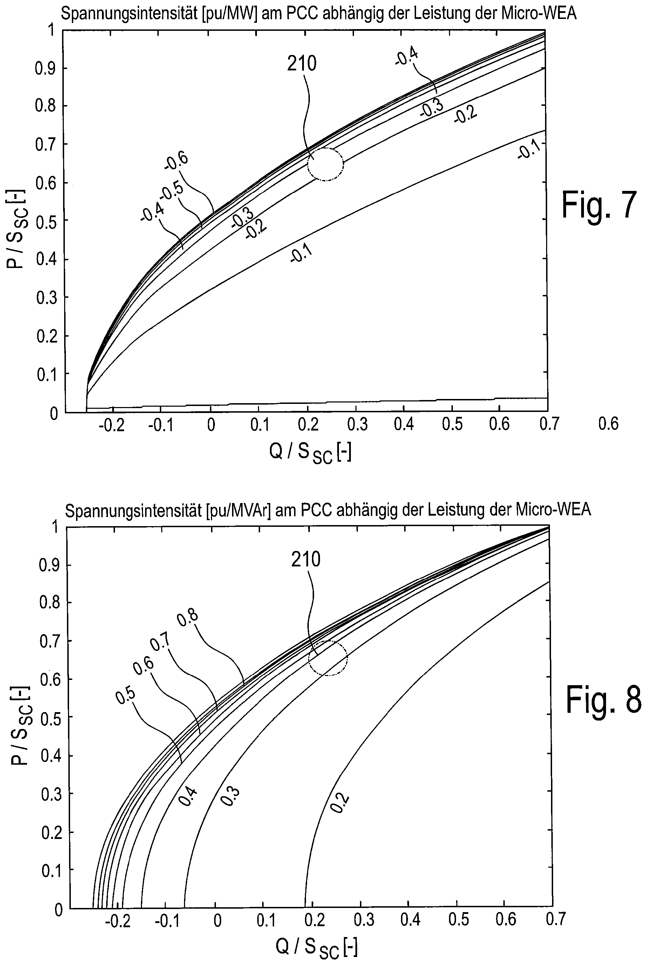

Die vorgeschlagene Lösung analysiert zunächst genau das Netz bezogen auf den vorgesehenen Netzanschlusspunkt, insbesondere indem Zusammenhänge wie in der Fig. 6 - und vorzugsweise in den später noch erläuterten Figuren 7 und 8 - dargestellt sind, quantitativ aufgenommen werden. Insbesondere erfolgt eine solche Analyse unter wiederholter Aufstellung und Lösung der Jacobi-Matrix für diverse Punkte. Basierend auf einer solchen Netzanalyse kann dann sowohl eine Stabilitätsgrenze gemäß der Stabilitätsgrenze 202 festgelegt werden, als auch ein gewünschter Betriebsbereich gemäß dem erhöhten Betriebsbereich 210 der Fig. 6 ausgewählt werden.

Ergänzend wird vorgeschlagen, dass eine Regelung der Windenergieanlage im Sinne einer geschlossenen Regelschleife durchgeführt wird, wie sie insbesondere in der Fig. 2 oder auch der Fig. 4 dargestellt ist. In Fig. 2 besteht die Regelschleife im Wesentlichen aus dem Wechselrichter 16, dem Trafo 18 und der Steuereinheit 22, die Messwerte am Netzanschlusspunkt 2 berücksichtigt und den Wechselrichter 16 steuert, um dadurch die eingespeiste Wirkleistung P und Blindleistung Q gemäß dem Wirkpfeil 20 einzustellen. Die Regelung kann zwar auch Auswirkung auf die Steuerung der Windenergieanlage im Bereich des Generators 6 haben, zunächst kommt aber die beschriebene Regelschleife aus Wechselrichter 16, Trafo 18 und Steuereinheit 22 ohne mechanische Elemente aus und kann äußerst schnell reagieren. Hierfür kann die Kenntnis der Netzeigenschaften am Netzanschlusspunkt, also Netzanschlusspunkt 2 gemäß Fig. 2, mit berücksichtigt werden, insbesondere in der Steuereinheit 22 mit berücksichtigt werden. Es ist somit eine schnelle Regelung implementierbar, die dabei das Verhalten des Netzes am Netzanschlusspunkt, insbesondere die Stabilitätsgrenze kennt. Hierdurch wird es möglich, die Windenergieanlage oder den Windpark - ggf. auch andere Erzeuger - in einem gewünschten Betriebsbereich, wie dem erhöhten Betriebsbereich 210 der Fig. 6, zu betreiben und dabei gleichwohl eine hohe Stabilität und Sicherheit zu gewährleisten.

Die Figuren 7 und 8 zeigen die Spannungssensitivität in Abhängigkeit der Blindleistung Q und der Wirkleistung P. Beide Figuren 7 und 8 verwenden somit die gleichen Werte an Abszisse und Ordinate, nämlich normierte Blindleistung an der Abszisse bzw. normierte Wirkleistung an der Ordinate.

Die gezeigte Spannungssensitivität ist die Änderung der Spannung mit der Änderung der Wirkleistung gemäß Fig. 7 bzw. die Änderung der Spannung mit der Blindleistung gemäß Fig. 8. Anders ausgedrückt wird die partielle Ableitung der Spannung am Netzanschlusspunkt nach der Wirkleistung in Fig. 7 und die partielle Ableitung der Spannung nach der Blindleistung in Fig. 8 dargestellt. Fig. 7 zeigt somit das Verhalten des Wirkleistungsblocks 52 der Fig. 5. Fig. 8 zeigt das Verhalten des Blindleistungsblocks 54 der Fig. 5, wobei in beiden Fällen die Darstellung abhängig der Betriebspunkte dargestellt ist, die insoweit durch die jeweils aktuell eingespeiste Blindleistung Q und eingespeiste Wirkleistung P bestimmt werden. Die Werte der jeweiligen Kennlinien beziehen sich auf einen Netzanschlusspunkt mit einer Kurzschlussleistung $S_{SC}$ = 3,73MVA an den beispielhaft zwei Windenergieanlagen mit je einer Nennleistung von 2MW angeschlossen werden sollen. Somit könnten mit dieser Testanordnung Tests bei einem Kurzschlussstromverhältnis von etwas weniger als 1 durchgeführt werden. Für durchgeführte Tests wurde aber die jeweils aktuelle Leistung der Testwindfarm als Basis verwendet und als Anschlussleistung der Zielwindfarm, also der (fiktiv) zu untersuchenden Windfarm festgelegt.

Bezogen auf die vorliegende Ausführungsform, also die Beispielkonfiguration, ist jeweils die Änderung der normierten Spannung bezogen auf eine Änderung der Leistung P in MW bzw. eine Änderung der Blindleistung Q in MVAr beschrieben. In den Figuren 7 und 8 ist zudem der gewünschte, also erhöhte Betriebsbereich 210 eingezeichnet. Demnach beträgt die Spannungssensitivität bezogen auf Wirkleistungsänderungen gemäß Fig. 7 etwa minus 0,2 bis minus 0,4. Die Spannungssensitivität in dem erhöhten Betriebsbereich 210 bezogen auf Änderungen der Blindleistung gemäß Fig. 8 beträgt etwa 0,3 bis 0,5. Es wird somit vorgeschlagen, für die Auslegung der an dem konkreten Netzanschlusspunkt anzuschließenden Windenergieanlage diese Spannungssensitivität in Bezug auf Änderungen der Wirkleistung, wie beispielhaft in Fig. 7 gezeigt, und/oder in Bezug auf Änderungen der Blindleistung, wie beispielhaft in Fig. 8 gezeigt, aufzunehmen und in der Steuerung zu berücksichtigen. Insbesondere sollen diese Werte auch bei der Steuerung und vorzugsweise auch bei der Auslegung der Steuerung berücksichtigt werden. Vorzugsweise wird eine Reglerverstärkung abhängig von der Sensitivität, insbesondere Spannungssensitivität ausgewählt.

Insbesondere wird vorgeschlagen, diese Werte in dem geschlossenen Regelkreis zu berücksichtigen, wie er schematisch durch die in Fig. 2 gezeigten Elemente Wechselrichter 16, Trafo 18 und Steuereinheit 22 verwirklicht wird. Dabei kommt es auf den Trafo 18 weniger an, er dürfte jedoch häufig vorhanden und notwendig sein, um schon am Netzanschlusspunkt 2 eine entsprechend hohe Spannung einspeisen zu können. Insbesondere werden Erkenntnisse über die Spannungssensitivität in der Steuereinheit 22 berücksichtigt. Somit kann in Kenntnis dieser Werte eine maßgeschneiderte Steuerung bzw. Regelung für den konkreten Netzanschlusspunkt ausgelegt und umgesetzt werden. Damit ist es dann möglich, von bisherigen großen Werten des Kurzschlussstromverhältnisses von 10 und noch höher herunterzukommen und geringe Werte, wie bspw. einen Wert von 1,5 für das Kurzschlussstromverhältnis, vorzusehen und damit die Windenergieanlage in dem erhöhten Betriebsbereich 210 zu betreiben, der in den Figuren 6 bis 8 zur Veranschaulichung eingezeichnet ist.

Die Erfindung schlägt somit vor, insbesondere eine Windenergieanlage und schließlich auch einen Windpark nicht mehr nach dem alten Prinzip des Netzparallelbetriebs anzuschließen, in der Annahme, dass die Netzkapazität ausreicht, sondern vielmehr gezielt den Anschlusspunkt auszuwerten und diese Erkenntnisse bereits im Vorfeld zu berücksichtigen und dann eine maßgeschneiderte Windenergieanlage oder Windenergieanlagenpark dort anzuschließen. Dabei wird vorzugsweise auch die Steuerung bzw. Regelung und auch der auszuwählende Betriebsbereich, insbesondere in Bezug auf einzuspeisende Blindleistung Q und einzuspeisende Wirkleistung P maßgeschneidert und näher an einer Stabilitätsgrenze angeordnet, als von der Fachwelt bisher durchgeführt wurde. Dabei werden gezielt die Vorzüge einer Windenergieanlage eingesetzt, nämlich auf Änderungen, insbesondere Änderungen von Zuständen des Netzes schnell, und gezielt reagieren zu können. Hierdurch wird jedenfalls für das Anschließen von Windenergieanlagen an das Netz eine massive Überdimensionierung des Netzes, insbesondere des konkreten Netzanschlusspunktes, vermieden. Gleichwohl kann die Stabilität eingehalten oder sogar verbessert werden, wenn die Steuerung bzw. Regelung sehr genau die Eigenschaften des Netzanschlusspunktes bzw. des Netzes bezogen auf den Netzanschlusspunkt kennt und Zustände im Netz beobachtet.

Rein vorsorglich wird noch darauf hingewiesen, dass unter einer Regelung grundsätzlich ein geschlossener Regelkreis mit Rückführung verstanden wird, wobei eine Steuerung grundsätzlich einen offenen "Regelkreis" bezeichnet, also eine Situation ohne Rückführung. Gleichwohl kann ein Steuerblock, der wiederum ein Steuerverfahren implementiert, in einer Regelschleife eingesetzt werden. Für das Beispiel der Fig. 2 bedeutet das, dass die Steuereinheit 22 insoweit eine Steuerung ist, als das sie eine bestimmte Steuerfunktion oder Übertragungsfunktion, die auch nicht linear und/oder sprunghaft sein kann und/oder mehrere Größen betreffen kann, aufweist. Eingesetzt wird diese Steuereinheit allerdings in dem Regelkreis, der in Fig. 2 dargestellt ist und im Wesentlichen neben der Steuereinheit 22 den Wechselrichter 16, Trafo 18 und schließlich eine Messeinheit am Netzanschlusspunkt 2 mit Vergleichseinheit 23 umfasst. Die Steuereinheit 22 steuert also den Wechselrichter und ist dafür in dem geschlossenen Regelkreis eingebunden und damit Teil einer Regelung.

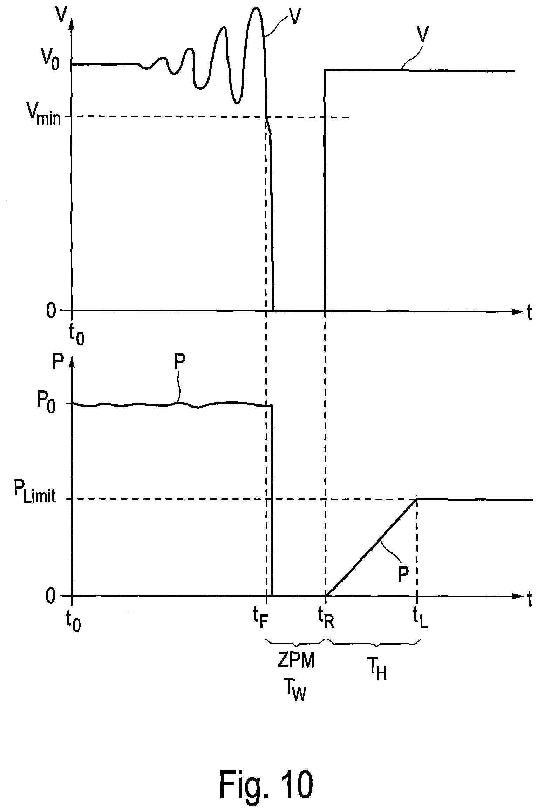

Fig. 10 zeigt in einem oberen Diagramm einen Spannungsverlauf schematisch an einem Einspeisepunkt in Abhängigkeit der Zeit. Das untere Diagramm zeigt korrespondierend den Verlauf eingespeister Wirkleistung P zur selben Zeit. Demnach liegt zum Zeitpunkt $t_0$ eine Spannung V mit dem Wert $V_0$ vor. Diese Spannung $V_0$ ist eine normale Spannung und kann bspw. die Nennspannung an der entsprechenden Stelle sein. Gleichzeitig wird eine Leistung P eingespeist, die etwa dem gewünschten Wert $P_0$ entspricht, was bspw. Nennleistung der betreffenden Windenergieanlage sein kann, sofern insbesondere ausreichend Wind vorhanden ist. Die eingespeiste Leistung P kann geringe Schwankungen aufweisen, worauf es hier nicht ankommt. Grundsätzlich wird die zugrundeliegende Windenergieanlage - es kommt auch ein Windpark in Betracht - in einem Arbeitspunkt betrieben, bei dem diese Wirkleistung P etwa mit dem Wert $P_0$ eingespeist wird.

Treten nun Stabilitätsprobleme auf, kann bspw. die Spannung V zu schwanken beginnen und instabil werden. Fig. 10 zeigt hierzu im oberen Diagramm beispielhaft ein Aufschwingen der Spannung, bis die Spannung V schließlich einen Grenzwert $V_{min}$ unterschreitet. Dieses Unterschreiten kann bspw. aber auch ohne ein vorheriges Aufschwingen eintreten. Jedenfalls unterschreitet die Spannung V zum Zeitpunkt $t_F$ diesen Spannungsgrenzwert $V_{min}$. Die Einspeisung wird daraufhin unterbrochen und die Spannung V fällt auf den Wert 0 ab. Gleichzeitig fällt die eingespeiste Leistung P auf 0 ab.

Es wird nun versucht, so schnell wie möglich die Einspeisung wieder aufzunehmen. In diesem Sinne wird zum Zeitpunkt $t_R$ die Einspeisung wieder aufgenommen und die eingespeiste Wirkleistung P möglichst bald und möglichst schnell erhöht. Entsprechend steigt auch die Spannung V zum Zeitpunkt $t_R$ wieder an. Idealerweise springt die Spannung V mit dem Einspeisen der ersten Wirkleistung P auf den nominellen Wert $V_0$. Dieser idealisiert eingezeichnete Verlauf kann aber auch anders verlaufen.

Um möglichst schnell die Einspeisung von Wirkleistung P wieder aufnehmen zu können, bleibt die Windenergieanlage möglichst auch unmittelbar nach dem Auftreten des Fehlers zum Zeitpunkt $t_F$ mit dem Netz verbunden, so dass in der Zeit von $t_F$ bis $t_R$ zwar keine Leistung P eingespeist wird, die Anlage aber mit dem Netz verbunden bleibt. Ein solcher Zustand wird hier als Null-Leistungs-Modus oder als sog. "Zero Power Mode" ZPM bezeichnet.

Somit ist es möglich, möglichst schnell wieder die Einspeisung aufzunehmen und die eingespeiste Wirkleistung P zu erhöhen. Es wird aber nun vorgeschlagen, diese eingespeiste Wirkleistung P nur bis zu einer kleineren begrenzten also limitierten Wirkleistung $P_{Limit}$ zu erhöhen. Insoweit wird die Windenergieanlage dann zum Zeitpunkt $t_L$ in einem begrenzten Arbeitspunkt betrieben. Dieser begrenzte Arbeitspunkt wird hier insbesondere durch die verringerte eingespeiste Wirkleistung P dargestellt. Die Windenergieanlage nimmt somit einen geänderten, stabilisierten Betriebspunkt ein, der insbesondere einen höheren Stabilitätsabstand, auch als Stabilitätsreserve bezeichnet, zu einer Stabilitätsgrenze aufweist. Die Windenergieanlage kann somit zur Netzstützung bereits wieder beitragen, was zum Preis einer geringeren eingespeisten Wirkleistung P erfolgt.

Der Arbeitspunkt, der hier im Wesentlichen zum Zeitpunkt $t_L$ erreicht wird, unterscheidet sich von dem Arbeitspunkt, indem die Windenergieanlage vor dem Zeitpunkt $t_F$ betrieben wurde, durch eine veränderte Wirkleistung. Die Arbeitspunkte können sich aber auch zusätzlich oder stattdessen in anderen Parametern, insbesondere in der eingespeisten Blindleistung unterscheiden.

Die Zeit vom Zeitpunkt $t_F$ des Stabilitätsverlustes bis zur Wiederaufnahme der Einspeisung zum Zeitpunkt $t_R$ wird als Wiederaufnahmezeit $T_W$ bezeichnet. Somit gilt: $T_W = t_R - t_F$. Die Zeit von der Wiederaufnahme zum Zeitpunkt $t_R$ bis zum Erreichen des begrenzten Leistungswertes zum Zeitpunkt $t_L$ wird als Hochlaufzeit $T_H$ bezeichnet. Somit gilt $T_H = t_L - t_R$.

## Patentansprüche

1. Verfahren zum Steuern eines an einem Netzanschlusspunkt (2) an ein elektrisches Versorgungsnetz (4) angeschlossenen Erzeugers (1) elektrischer Energie umfassend die Schritte:

   - Einspeisen elektrischer Leistung in das elektrische Versorgungsnetz (4), wobei der Erzeuger in einem ersten Arbeitspunkt betrieben wird,
   - Unterbrechen der Einspeisung, so dass keine Leistung ins Versorgungsnetz (4) gespeist wird, wenn eine Störung im elektrischen Versorgungsnetz (4) oder eine Störung der Einspeisung in das elektrische Versorgungsnetz (4) vorliegt oder angezeigt wird,
   - Wiederaufnehmen der Einspeisung, so dass elektrische Leistung wieder ins Versorgungsnetz (4) eingespeist wird, **dadurch gekennzeichnet, dass**
   der Erzeuger (1) das Wiederaufnehmen der Einspeisung in einen zweiten Arbeitspunkt vornimmt bzw. in diesen zweiten Arbeitspunkt hochgefahren wird und der zweite Arbeitspunkt gegenüber dem ersten Arbeitspunkt so ausgelegt ist, dass mit einer höheren Stabilitätsreserve in das Versorgungsnetz (4) eingespeist wird, und wobei der Erzeuger (1) bei der Unterbrechung der Einspeisung mit dem Versorgungsnetz (4) verbunden bleibt, wobei zunächst die Blindleistung eingestellt wird, nämlich auf den Wert des ersten oder zweiten Arbeitspunktes, um dadurch eine Netzstützung zu erreichen, und anschließend die Wirkleistung eingestellt, nämlich erhöht wird, und wobei die Blindleistung und die Wirkleistung jeweils mittels einer zeitlichen Rampenfunktion eingestellt bzw. erhöht werden und die Rampenfunktionen so gewählt sind, dass der Blindleistungswert des zweiten Arbeitspunktes eher erreicht wird, als der Wirkleistungswert des zweiten Arbeitspunktes und/oder dass der Blindleistungswert des ersten Arbeitspunktes eher erreicht wird, als der Wirkleistungswert des ersten Arbeitspunktes.

2. Verfahren nach Anspruch 1,
   **dadurch gekennzeichnet, dass**
   der Erzeuger (1) ein dezentraler Erzeuger (1) und/oder eine Windenergieanlage (1) oder ein mehrere Windenergieanlgen (1) umfassender Windpark ist, und/oder dass der Erzeuger (1) zum Einspeisen eine spannungsbasierte Einspeisung verwendet (VSC), und/oder dass der Erzeuger (1) bei der Unterbrechung der Einspeisung in Betrieb bleibt.

3. Verfahren nach Anspruch 1 oder 2,
**dadurch gekennzeichnet, dass**
der Erzeuger (1) im zweiten Arbeitspunkt weniger Wirkleistung und/oder weniger Blindleistung in das Versorgungsnetz (4) einspeist, als im ersten Arbeitspunkt, wobei vorzugsweise

- die Wirkleistung um wenigstens 10%, insbesondere um wenigsten 20% reduziert wird, bzw.
- die Blindleistung um wenigstens 10%, insbesondere um wenigstens 20% reduziert wird.

4. Verfahren nach einem der vorstehenden Ansprüche,
**dadurch gekennzeichnet, dass**
beim Wiederaufnehmen der Einspeisung die eingespeiste Wirkleistung mit einem vorgegebenen Verlauf, insbesondere rampenförmig, eingestellt, insbesondere erhöht wird, und dabei die eingespeiste Blindleistung begleitend so
geführt wird, dass sie spannungsstabilisierend wirkt, wobei die Blindleistung insbesondere basierend auf einer zuvor
aufgenommenen Netzcharakteristik des elektrischen Versorgungsnetzes geführt wird.

5. Verfahren nach einem der vorstehenden Ansprüche,
**dadurch gekennzeichnet, dass**

- die Wiederaufnahme (Tw) der Einspeisung innerhalb einer vorbestimmten Wiederaufnahmezeit nach der
Unterbrechung erfolgt, und vorzugsweise eine Wiederaufnahmezeit (Tw) kleiner als 10s gewählt wird und/oder
dass
- bei Wiederaufnahme innerhalb einer vorbestimmten Hochlaufzeit ($T_H$) in den zweiten Arbeitspunkt hochgefahren wird.

6. Verfahren nach einem der vorstehenden Ansprüche,
**dadurch gekennzeichnet, dass**
die Stabilitätsreserve

- eine kleinste Differenz zwischen eingespeister Blindleistung und Blindleistung einer Stabilitätsgrenze (202),
- eine kleinste Differenz zwischen eingespeister Wirkleistung und Wirkleistung der Stabilitätsgrenze (202) oder
- eine kleinsten Differenz zwischen der Spannung am Netzanschlusspunkt (2) und der Spannung der Stabilitätsgrenze (202),

ist oder abhängig von wenigstens einer dieser Differenzen berechnet wird, insbesondere aus wenigstens einer
dieser Differenzen berechnet wird, wobei die Stabilitätsgrenze (202) insbesondere

- eine Funktion der Netzspannung am Netzanschlusspunkt (2) in Abhängigkeit der eingespeisten Blindleistung
ist und/oder in Abhängigkeit der eingespeisten Wirkleistung ist, und/oder
- die Stabilitätsgrenze (202) als gekrümmte Fläche in einem durch die Netzspannung am Netzanschlusspunkt
(2), der eingespeisten Blindleistung und der eingespeisten Wirkleistung aufgespannten Raum gegeben ist.
und/oder
- die Stabilitätsgrenze eine Funktion der eingespeisten Wirkleistung in Abhängigkeit der eingespeisten Blindleistung ist oder umgekehrt.

7. Verfahren nach einem der vorstehenden Ansprüche,
**dadurch gekennzeichnet, dass**
die Unterbrechung der Einspeisung erfolgt, wenn

- am Netzanschlusspunkt (2) ein Stabilitätsverlust des Versorgungsnetzes (4) und/oder der Einspeisung in das
Versorgungsnetz (4) auftritt oder angezeigt wird,
- ein Überstrom im Versorgungsnetz (4) und/oder am Netzanschlusspunkt (2) erfasst wurde,
- ein Fehler, insbesondere ein Kurzschluss, im Versorgungsnetz (4) erfasst wurde,
- eine Spannungsabsenkung im Versorgungsnetz (4) und/oder am Netzanschlusspunkt (2) erfasst wurde,
- Netzumschaltung und/oder Stufungen von Transformatoren im Versorgungsnetz vorgenomen wurden,
- Extremböen auftreten.

**8.** Verfahren nach einem der vorstehenden Ansprüche,
**dadurch gekennzeichnet, dass**
beim Erfassen eines am Netzanschlusspunkt (2) drohenden Stabilitätsverlustes und/oder beim Wiederaufnehmen der Einspeisung

- von einer Normalsteuerung auf eine Stabilisierungssteuerung umgeschaltet wird, die den Erzeuger im Vergleich zur Normalsteuerung mit erhöhter Stabilität steuert,
- die einzuspeisende Wirkleistung des Erzeuger (1) auf einen Wert kleiner als ein Maximalwert des Erzeugers (1) beschränkt wird, insbesondere auf einen Wert kleiner als eine Nennleistung des Erzeugers (1), und/oder
- als Erzeuger (1) ein Windpark mit mehreren Windenergieanlagen (1) vorgesehen ist und von einer bzw. der Normalsteuerung auf eine zentrale Parksteuerung umgeschaltet wird, die die Windenergieanlagen (1) im Windpark koordiniert steuert, um dadurch einem Stabilitätsverlust entgegenzuwirken.

**9.** Verfahren nach Anspruch 8,
**dadurch gekennzeichnet, dass**
die Umschaltung auf die Stabilisierungssteuerung, die Begrenzung der Wirkleistung und/oder die Verwendung der zentralen Parksteuerung beibehalten wird, bis erfasst wurde, dass ein Stabilitätsverlust nicht mehr droht.

**10.** Verfahren nach einem der vorstehenden Ansprüche,
**dadurch gekennzeichnet, dass**
nach dem Erfassen eines am Netzanschlusspunkt (2) drohenden Stabilitätsverlustes und/oder nach dem Wiederaufnehmen der Einspeisung durch ein externes Signal von einer bzw. der Stabilisierungssteuerung eine bzw. die Steuerung des Erzeugers in eine bzw. die Normalsteuerung zurückgestellt wird und/oder eine bzw. die Begrenzung der eingespeisten Wirkleistung aufgehoben wird.

**11.** Verfahren nach einem der vorstehenden Ansprüche,
**dadurch gekennzeichnet, dass**
ein Windpark mit mehreren Windenergieanlagen (1) vorgesehen ist, jede Windenergieanlage (1) einen Erzeuger (1) bildet und nach dem Unterbrechen der Einspeisung einer oder einiger Windenergieanlagen (1) diese individuell die Einspeisung wiederaufnehmen und insbesondere jeweils von einer Normalsteuerung auf eine Stabilisierungssteuerung umschalten, die die jeweilige Windenergieanlage im Vergleich zur Normalsteuerung mit erhöhter Stabilität steuert.

**12.** Verfahren nach einem der vorstehenden Ansprüche,
**dadurch gekennzeichnet, dass**
die Wiederaufnahme erfolgt, wenn die Störung ganz oder teilweise noch vorliegt.

**Claims**

**1.** A method for controlling a generator (1) of electric energy that is connected to an electrical supply grid (4) on a grid connection point (2) comprising the following steps:

- feeding electrical power into the electrical supply grid (4), whereby the generator is operated in a first operating point,
- interrupting the feeding so that no power is fed into the supply grid (4) if a fault in the electrical supply grid (4) or a fault of the feeding into the electrical supply grid (4) exists or is displayed,
- resuming the feeding so that electrical power is again fed into the supply grid (4), **characterized in that**
the generator (1) resumes the feeding into a second operating point, or the feeding is gradually increased into the second operating point, and the second operating point is designed in such a way, as compared to the first operating point, that feeding into the supply grid (4) takes place with a higher stability reserve and wherein the generator (1) remains connected to the supply grid (4) when the feeding is interrupted, wherein
at first, the reactive power is adjusted, namely to the value of the first or second operating point so as to support the grid, and then the active power is adjusted, namely increased, and wherein the reactive power and the active power are adjusted or increased respectively with a ramp function in terms of time, and that the ramp function is selected in such a way that the reactive power value of the second operating point is achieved earlier than the active power value of the second operating point and/or that the reactive power value of the first operating point is achieved earlier than the active power value of the first operating point.

**2.** Method according to Claim 1,
**characterized in that**
generator (1) is a decentralized generator (1) and/or a wind power installation (1) or a wind park (1) comprising several wind power installations, and/or that generator (1) uses a voltage-based feeding (VSC) to feed, and/or that generator (1) when the feeding is interrupted remains in operation.

**3.** Method according to Claim 1 or 2,
**characterized in that**
generator (1) feeds less active power and/or reactive power into supply grid (4) in the second operating point than in the first operating point, whereby preferably

- the active power is reduced by at least 10%, particularly at least by 20%, or
- the reactive power is reduced by at least 10%, particularly at least by 20%.

**4.** Method according to one of the above claims, **characterized in that**, when the feeding is resumed, the fed-in active power is adjusted, particularly increased with a predetermined course, particularly in ramp form, and that the fed-in reactive power is at the same time conducted in such a way that it stabilizes the voltage, whereby the reactive power is particularly conducted on the basis of a previously recorded grid characteristic of the electrical supply grid.

**5.** Method according to one of the above claims,
**characterized in that**

- the resumption (Tw) of the feeding is performed within a predetermined resumption time after the interruption, and preferably a resumption time (Tw) of less than 10 seconds is selected, and/or that
- a gradual increase in the second operating point takes place when the feeding is resumed within a predetermined run-up time (TH).

**6.** Method according to one of the above claims,
**characterized in that**
the stability reserve

- is the smallest difference between the fed-in reactive power and the reactive power of stability boundary (202),
- is the smallest difference between the fed-in active power and the active power of stability boundary (202), or
- is the smallest difference between the voltage on grid connection point (2) and the voltage of stability boundary (202),
or is calculated depending on at least one of these differences, in particular is calculated out of at least one of these differences, whereby stability boundary (202) is particularly
- a function of the grid voltage on grid connection point (2), depending on the fed-in reactive power and/or depending on the fed-in active power, and/or
- stability boundary (202) is provided as a curved surface in a space formed by the grid voltage on grid connection point (2), the fed-in reactive power and the fed-in active power, and/or
- the stability boundary is a function of the fed-in active power depending on the fed-in reactive power, or vice versa.

**7.** Method according to one of the above claims,
**characterized in that**
the feeding is interrupted if

- a loss of stability of supply grid (4) and/or the feeding into supply grid (4) occurs or is displayed on the grid connection point (2),
- an overcurrent was identified in supply grid (4) and/or on the grid connection point (2),
- a fault, particularly a short circuit, was identified in supply grid (4),
- a voltage fall was identified in supply grid (4) and/or on the grid connection point (2),
- the switching and/or stepping of transformers was conducted in the supply grid,
- there are extreme gusts.

**8.** Method according to one of the above claims,
**characterized in that**,

if a threatening loss of stability is identified on the grid connection point (2) and/or when the feeding is resumed,

- switching from a normal control to a stabilization control is performed, which controls the generator with higher stability in comparison to the normal control,
- the active power of generator (1) that is to be fed in is limited to a value that is smaller than the maximum value of generator (1), particularly to a value that is smaller than a nominal capacity of generator (1), and/or
- a wind park with several wind power installations (1) is provided as generator (1), and switching from a (or the) normal control to a central park control is performed, which coordinates and controls the wind power installations (1) in the wind park so as to counteract a loss of stability.

9. Method according to Claim 8,
**characterized in that**
the switching to the stabilization control, the limitation of the active power and/or the use of the central park control is maintained until it is identified that a loss of stability is no longerthreatening.

10. Method according to one of the above claims,
**characterized in that**
a (or the) control of the generator is reset to a (or the) normal control by an external signal of a (or the) stabilization control, and/or the limitation of the fed-in active power is annulled, after a threatening loss of stability has been identified on the grid connection point and/or the feeding has been resumed.

11. Method according to one of the above claims,
**characterized in that**
a wind park with several wind power installations (1) is provided, each wind power installation (1) is a generator (1), and that after the interruption of the feeding of one or several wind power installation(s) (1), said wind power installations resume the feeding individually, and particularly switch from a normal control to a stabilization control, which controls the respective wind power installation with higher stability in comparison to the normal control.

12. Method according to one of the above claims,
**characterized in that**
the feeding is resumed if the fault still exists wholly or partly.

**Revendications**

1. Procédé servant à commander un générateur (1) d'énergie électrique raccordé au niveau d'un point de raccordement au réseau (2) à un réseau d'alimentation (4) électrique, comprenant les étapes :

- d'injection d'une puissance électrique dans le réseau d'alimentation (4) électrique, dans lequel le générateur fonctionne à un premier point de travail,
- d'interruption de l'injection de sorte qu'aucune puissance ne soit injectée dans le réseau d'alimentation (4) quand un dysfonctionnement dans le réseau d'alimentation (4) électrique ou un dysfonctionnement de l'injection dans le réseau d'alimentation (4) électrique est présent ou s'affiche,
- de reprise de l'injection de sorte qu'une puissance électrique soit à nouveau injectée dans le réseau d'alimentation (4), **caractérisé en ce que**
le générateur (1) réalise la reprise de l'injection à un deuxième point de travail ou est démarré audit deuxième point de travail et le deuxième point de travail est configuré par rapport au premier point de travail de telle sorte que l'injection dans le réseau d'alimentation (4) est réalisée avec une plus grande réserve de stabilité, et dans lequel le générateur (1) reste lié au réseau d'alimentation (4) lors de l'interruption de l'injection, dans lequel dans un premier temps la puissance réactive est réglée, à savoir sur la valeur du premier ou du deuxième point de travail, pour atteindre ainsi un support de réseau, puis la puissance active est réglée, à savoir est augmentée, et dans lequel
la puissance réactive et la puissance active sont réglées ou augmentées respectivement au moyen d'une fonction de rampe temporelle, et les fonctions de rampe sont choisies de telle sorte que la valeur de puissance réactive du deuxième point de travail est atteinte plus tôt que la valeur de puissance active du deuxième point de travail et/ou que la valeur de puissance réactive du premier point de travail est atteinte plus tôt que la valeur de puissance active du premier point de travail.

**2.** Procédé selon la revendication 1,
**caractérisé en ce que**
le générateur (1) est un générateur décentralisé (1) et/ou une éolienne (1) ou un parc éolien comprenant plusieurs éoliennes (1), et/ou que le générateur (1) d'injection utilise une injection basée sur la tension (VSC), et/ou que le générateur (1) continue à fonctionner lors de l'interruption de l'injection.

**3.** Procédé selon la revendication 1 ou 2,
**caractérisé en ce que**
le générateur (1) injecte au deuxième point de travail moins de puissance active et/ou moins de puissance réactive dans le réseau d'alimentation (4) qu'au premier point de travail, dans lequel de préférence

- la puissance active est réduite d'au moins 10 %, en particulier d'au moins 20 %, ou
- la puissance réactive est réduite d'au moins 10 %, en particulier d'au moins 20 %.

**4.** Procédé selon l'une quelconque des revendications précédentes,
**caractérisé en ce que**
lors de la reprise de l'injection, la puissance active injectée est réglée, en particulier est augmentée, avec un profil prédéfini, en particulier en forme de rampe, et la puissance réactive injectée est ce faisant guidée de manière concomitante de telle sorte qu'elle agit avec un effet de stabilisation de tension, dans lequel la puissance réactive est guidée en particulier sur la base d'une caractéristique de réseau adoptée au préalable du réseau d'alimentation électrique.

**5.** Procédé selon l'une quelconque des revendications précédentes,
**caractérisé en ce que**

- la reprise (Tw) de l'injection est effectuée dans une durée de reprise prédéfinie après l'interruption, et de préférence une durée de reprise (Tw) est choisie de manière à être inférieure à 10 s, et/ou que
- la reprise est démarrée pendant une phase d'accélération ($T_H$) prédéfinie au deuxième point de travail.

**6.** Procédé selon l'une quelconque des revendications précédentes,
**caractérisé en ce que**
la réserve de stabilité est

- une différence la plus petite entre une puissance réactive injectée et une puissance réactive d'une limite de stabilité (202),
- une différence la plus petite entre une puissance active injectée et une puissance active de la limite de stabilité (202), ou
- une différence la plus petite entre la tension au niveau du point de raccordement au réseau (2) et la tension de la limite de stabilité (202),
ou est calculée en fonction d'au moins une desdites différences, en particulier est calculée à partir d'au moins une desdites différences, dans lequel la limite de stabilité (202) en particulier
- est une fonction de la tension de réseau sur le point de raccordement au réseau (2) en fonction de la puissance réactive injectée et/ou en fonction de la puissance active injectée, et/ou
- la limite de stabilité (202) est donnée en tant que surface incurvée dans un espace défini par la tension de réseau au niveau du point de raccordement au réseau (2), la puissance réactive injectée et la puissance active injectée, et/ou
- la limite de stabilité est une fonction de la puissance active injectée en fonction de la puissance réactive injectée, ou inversement.

**7.** Procédé selon l'une quelconque des revendications précédentes,
**caractérisé en ce que**
l'interruption de l'injection est effectuée quand

- une perte de stabilité du réseau d'alimentation (4) et/ou de l'injection dans le réseau d'alimentation (4) survient ou s'affiche au niveau du point de raccordement au réseau (2),
- une surintensité a été détectée dans le réseau d'alimentation (4) et/ou au niveau du point de raccordement au réseau (2),
- une erreur, en particulier un court-circuit, a été détectée dans le réseau d'alimentation (4),

- une baisse de tension a été détectée dans le réseau d'alimentation (4) et/ou au niveau du point de raccordement au réseau (2),
- une commutation de réseau et/ou des réglages pas à pas de transformateurs ont été réalisés dans le réseau d'alimentation,
- des rafales extrêmes se forment.

8. Procédé selon l'une quelconque des revendications précédentes,
**caractérisé en ce que**
lors de la détection d'une perte de stabilité imminente au niveau du point de raccordement au réseau (2) et/ou lors de la reprise de l'injection

- une commutation pour passer d'une commande normale à une commande de stabilité, qui commande le générateur avec une stabilité accrue par rapport à la commande normale, est mise en œuvre,
- la puissance active à injecter du générateur (1) est limitée à une valeur inférieure à une valeur maximale du générateur (1), en particulier à une valeur inférieure à une puissance nominale du générateur (1), et/ou
- un parc éolien avec plusieurs éoliennes (1) est prévu en tant que générateur (1) et une commutation d'une ou de la commande normale sur une commande de parc centralisée, qui commande de manière coordonnée les éoliennes (1) dans le parc éolien, est mise en œuvre pour contrecarrer ce faisant une perte de stabilité.

9. Procédé selon la revendication 8,
**caractérisé en ce que**
la commutation sur la commande de stabilisation, la limitation de la puissance active et/ou l'utilisation de la commande de parc centralisée sont maintenues jusqu'à ce qu'il soit détecté qu'une perte de stabilité n'est plus imminente.

10. Procédé selon l'une quelconque des revendications précédentes,
**caractérisé en ce que**
après la détection d'une perte de stabilité imminente au niveau du point de raccordement au réseau (2) et/ou après la reprise de l'injection, une ou la commande du générateur repasse dans une ou la commande normale et/ou une ou la limitation de la puissance active injectée est annulée par un signal externe d'une ou de la commande de stabilisation.

11. Procédé selon l'une quelconque des revendications précédentes,
**caractérisé en ce que**
un parc éolien est prévu avec plusieurs éoliennes (1), chaque éolienne (1) forme un générateur (1) et après l'interruption de l'injection d'une ou de certaines éoliennes (1), celles-ci reprennent individuellement l'injection et passent en particulier respectivement d'une commande normale sur une commande de stabilisation, qui commande l'éolienne respective avec une stabilité accrue par rapport à la commande normale.

12. Procédé selon l'une quelconque des revendications précédentes,
**caractérisé en ce que**
la reprise est effectuée quand le dysfonctionnement est encore présent en totalité ou en partie.

Fig. 1

Fig. 2

Fig. 3

Fig. 5

Fig. 4

Fig. 6

Spannungsintensität [pu/MW] am PCC abhängig der Leistung der Micro-WEA

Fig. 7

Spannungsintensität [pu/MVAr] am PCC abhängig der Leistung der Micro-WEA

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6891281 B
- US 7462946 B
- US 6965174 B
- US 6984898 B
- WO 2011050807 A2
- WO 2011110193 A1
- CA 2760888
- WO 2012089699 A2
- DE 102009027981 B4
- DE 102008062356 A1
- DE 102008045938 A1